(19) Europäisches Patentamt / European Patent Office / Office européen des brevets

(11) **EP 3 079 296 B1**

(12) **EUROPEAN PATENT SPECIFICATION**

(45) Date of publication and mention of the grant of the patent:
**19.05.2021 Bulletin 2021/20**

(21) Application number: **14878361.6**

(22) Date of filing: **04.08.2014**

(51) Int Cl.:
*H04L 1/16* (2006.01)          *H04L 1/18* (2006.01)
*H04L 5/00* (2006.01)          *H04L 1/08* (2006.01)

(86) International application number:
**PCT/CN2014/000749**

(87) International publication number:
**WO 2015/103722 (16.07.2015 Gazette 2015/28)**

(54) **METHOD, SYSTEM, TERMINAL AND BASE STATION FOR TRANSMITTING HYBRID AUTOMATIC REPEAT REQUEST ACKNOWLEDGEMENT (HARQ-ACK) FEEDBACK INFORMATION**

VERFAHREN, SYSTEM, ENDGERÄT UND BASISSTATION ZUR ÜBERTRAGUNG VON HARQ-RÜCKKOPPLUNGSINFORMATIONEN

PROCÉDÉ, SYSTÈME, TERMINAL, ET STATION DE BASE, POUR LA TRANSMISSION D'INFORMATIONS EN RETOUR D'ACCUSÉ DE RÉCEPTION DE REQUÊTE AUTOMATIQUE DE RÉPÉTITION HYBRIDE (HARQ-ACK)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2014 CN 201410006500**

(43) Date of publication of application:
**12.10.2016 Bulletin 2016/41**

(73) Proprietor: **ZTE Corporation**
**Shenzhen, Guangdong 518057 (CN)**

(72) Inventors:
• **CHEN, Xianming**
  **Shenzhen**
  **Guangdong 518057 (CN)**
• **DAI, Bo**
  **Shenzhen**
  **Guangdong 518057 (CN)**
• **LU, Zhaohua**
  **Shenzhen**
  **Guangdong 518057 (CN)**

(74) Representative: **Tiburzi, Andrea**
**Barzanò & Zanardo Roma S.p.A.**
**Via Piemonte 26**
**00187 Roma (IT)**

(56) References cited:
**WO-A2-2012/177046      CN-A- 101 489 255**

CN-A- 102 857 325          CN-A- 103 095 395
CN-A- 103 209 061          US-A1- 2013 070 710
US-A1- 2013 301 600

• IPWIRELESS INC: "Backwards compatible support for reduced bandwidth LTE UEs", 3GPP DRAFT; R1-120799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050563142, [retrieved on 2012-01-31]
• INTEL CORPORATION: "Coverage enhancement of DL/UL control channels for low cost MTC", 3GPP DRAFT; R1-135105 INTEL-MTC CONTROL CHANNELS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734807, Retrieved from the Internet: URL:http://www.3gpp.org/ftp/Meetings_3GPP_SYNC/RAN/RAN1/Docs/ [retrieved on 2013-11-13]

- **NTT DOCOMO: "Views on PUCCH Resource Allocation for EPDCCH", 3GPP DRAFT; R1-124258 PUCCH FOR EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Diego, USA; 20121008 - 20121012 29 September 2012 (2012-09-29), XP050662165, Retrieved from the Internet: URL:http://www.3gpp.org/ftp/tsg_ran/WG1_RL 1/TSGR1_70b/Docs/ [retrieved on 2012-09-29]**

- **SAMSUNG: "PUCCH Coverage Enhancements for MTC UEs", 3GPP DRAFT; R1-135199 MTC COVERAGE PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734897, Retrieved from the Internet: URL:http://www.3gpp.org/ftp/Meetings_3GPP_ SYNC/RAN/RAN1/Docs/ [retrieved on 2013-11-13]**

**Description**

Technical Field

The present invention relates to a wireless communication technology, in particular to a transmission method for HARQ-ACK feedback information, a terminal and a base station.

Background of the Related Art

MTC (Machine Type Communication) is also called as M2M (Machine To Machine), and UE (User Equipment) or terminals thereof are main application forms of Internet of Things at the present stage. Low power consumption and low cost are important guarantees for massive application thereof. At present, the M2M technology has already been supported by international famous manufacturers such as NEC, HP, CA, Intel, IBM and AT&T and has already been recognized by mobile operators in all countries. At present, most M2M devices deployed in the mart are mainly based on a GSM (Global System of Mobile communication).

In recent years, since spectral efficiency of LTE (Long Term Evolution) is high, more and more mobile operators select LTE as an evolution direction for broadband wireless communication systems in future. LTE-based M2M multi-type data services will become more attractive.

The 3GPP DRAFT "Backwards compatible support for reduced bandwidth LTE UEs," Rl-120799, vol. RAN WG1, published 31 January 2012, discloses MTC LTE UEs residing in a dedicated PUCCH region within the legacy PUSCH. This region is under control of the base station and is discontinuous.

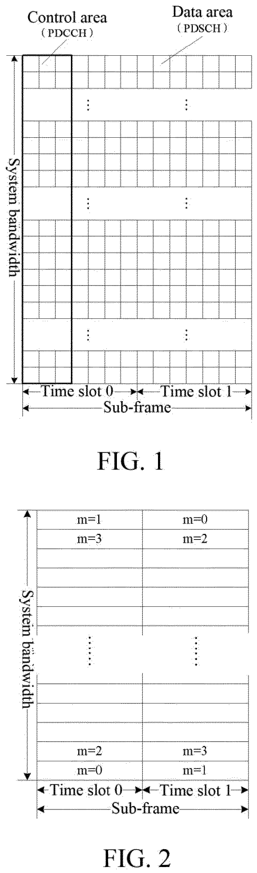

Types of physical channels for downlinks of an LTE system include: Physical Control Format Indication Channels (PCFICHs) for bearing control area symbolic numbers, Physical HARQ Indication Channels (PHICHs) for bearing Hybrid Automatic Repeat Request Acknowledgement (HARQ-ACK) of uplink data, Physical Downlink Control Channels (PDCCHs) for bearing information such as downlink allocation, uplink granting and power control, and Physical Downlink Shared Channels (PDSCHs) for bearing service data and/or layer 3 control information. FIG. 1 is a schematic diagram of a multiplexing relationship 1 between PDCCH and PDSCH in a downlink sub-frame in the related art. As shown in FIG. 1, PHCCH is transmitted in each sub-frame and has a time division multiplexing relationship with PDSCH. Specifically, PDCCH is transmitted through first X (its value is from 1 to 4) OFDM (Orthogonal Frequency Division Multiplexing) symbols of one sub-frame. A PDCCH consists of Y CCEs (Control Channel Elements), herein a value of Y is 1, 2, 4 or 8.

Types of physical channels of uplinks of the existing LTE system include: Physical Uplink Control Channels (PUCCHs) for bearing layer 1/layer 2 control information, and Physical Uplink Shared Channels (PUSCHs) for bearing various service data, layer 1/layer 2 control information and/or layer 3 control information, herein types of layer 1/layer 2 control information include Scheduling Request (SR), Channel State Information (CSI) and HARQ-ACK feedback of downlink data. According to contents of control information born by PUCCH, multiple PUCCH formats are divided. Specifically, a format for bearing SR is a PUCCH format 1, a format for bearing HARQ-ACK feedback is a PUCCH format 1a/1b, a format for bearing CSI is a PUCCH format 2, and a format for simultaneously bearing HARQ-ACK feedback and CSI is a PUCCH format 2a/2b.

Each sub-frame of the existing LTE system reserves at least one PUCCH resource for PUCCH, each PUCCH resource occupies two resource blocks respectively located in two time slots of a sub-frame, and the two resource blocks are respectively located in upper and lower sidebands of the system. As shown, FIG. 2 is a schematic diagram of mapping from PUCCH resources to Physical Resource Blocks (PRBs) in an uplink sub-frame in the related art. In FIG. 2, four PUCCH resources are reserved for PUCCH transmission and are respectively marked as m=0, 1, 2, 3, herein m denotes an index of PUCCH resource.

Different PUCCHs which belong to the same PUCCH resource multiplex together by means of code division, and PUCCHs which belong to different PUCCH resources multiplex together by means of time division and/or frequency division. Specifically, PUCCH format 1/1a/1b channels multiplex on a PUCCH resource by means of code division through cyclic shift of a constant-amplitude zero-autocorrelation sequence and an orthogonal block spread spectrum sequence, PUCCH format 2/2a/2b channels multiplex on a PUCCH resource by means of code division through cyclic shift of the constant-amplitude zero-autocorrelation sequence, and PUCCH format 1/1a/1b channels and PUCCH format 2/2a/2b channels can also multiplex on a PUCCH resource by means of code division through cyclic shift of the constant-amplitude zero-autocorrelation sequence.

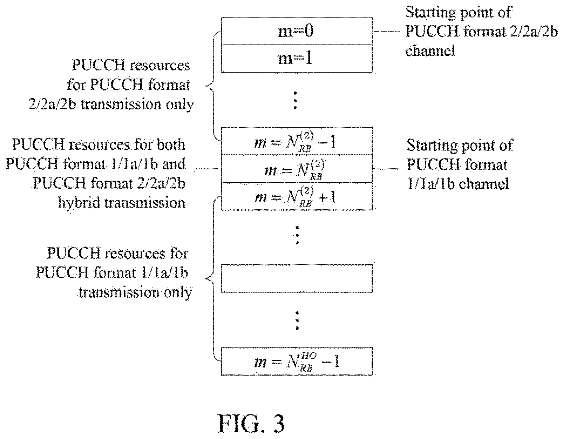

The existing LTE system divides all PUCCH resources into multiple types, specifically including PUCCH resources for PUCCH format 2/2a/2b transmission only, PUCCH resources for PUCCH format 1/1a/1b transmission only, and PUCCH resources for both PUCCH format 1/1a/1b transmission and PUCCH format 2/2a/2b transmission (called as PUCCH hybrid resources). As shown, FIG. 3 is a schematic diagram of PUCCH resource type division in the related art. In FIG. 3, first $N_{RB}^{(2)}$ PUCCH resources are only used for PUCCH format 2/2a/2b transmission, a next PUCCH resource is used for hybrid transmission of PUCCH format 2/2a/2b and PUCCH format 1/1a/1b, and other PUCCH resources are only used for PUCCH format 1/1a/1b transmission, herein m is an index of PUCCH resource, $N_{RB}^{HO}$ denotes the total number of reserved PUCCH resources and $N_{RB}^{(2)}$ denotes the number of PUCCH resources reserved for PUCCH format 2/2a/2b transmission only.

Through signaling, the existing LTE system can configure the number of PUCCH format 2/2a/2b channels included in a PUCCH format 2/2a/2b resource, the number of PUCCH format 1/1a/1b channels included in a PUCCH format 1/1a/1b resource, and the number of PUCCH format 1/1a/1b channels and the number of PUCCH format 2/2a/2b channels included in a hybrid PUCCH resource. As shown in FIG. 3, a starting point of PUCCH 2/2a/2b channels is located in a first reserved PUCCH resource and a starting point of PUCCH 1/1a/1b channels is located in a hybrid PUCCH resource indexed as $N_{RB}^{(2)}$

As described above, the existing LTE system transmits HARQ-ACK feedback information related to downlink service data through PUCCH format 1a/1b. In this situation, an index of the PUCCH format 1a/1b channel is implicitly determined according to an index of a first CCE resource occupied by PDCCH related to downlink allocation. In this implicit mapping process, an implicit mapping offset $N_{PUCCH}^{(1)}$ exists, i.e., indicating that first $N_{PUCCH}^{(1)}$ (indexed from 0 to $N_{PUCCH}^{(1)}$-1) channels in all PUCCH format 1/1a/1b channels will not be used for implicit mapping. In other words, it is not related to indexes of CCE resources occupied by PDCCH. After the index of the PUCCH format 1a/1b channel is determined, a terminal can determine an orthogonal block spread spectrum sequence index corresponding to the PUCCH format 1a/1b channel, a cyclic shift sequence index of the constant-amplitude zero-autocorrelation sequence and indexes of occupied PUCCH resources according to the index.

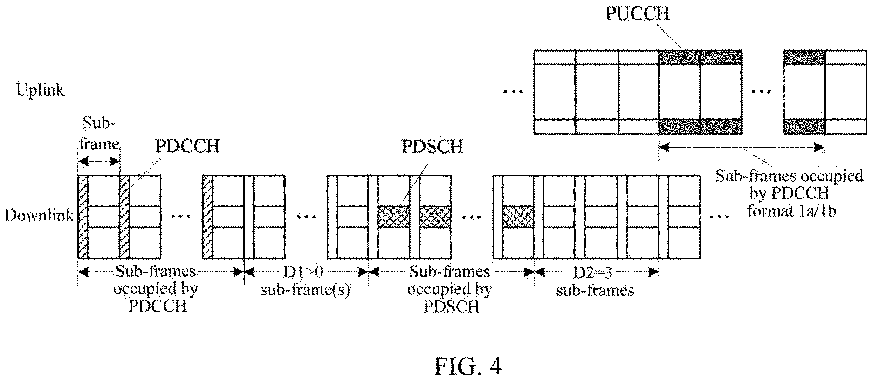

Since some MTC terminals may be installed in basements of dwellings or at positions which are blocked by aluminum alloy windows or traditional thick-wall building structures, compared with normal LTE terminals, these MTC terminals will have quite serious penetration losses at radio-frequency interfaces, and thus the coverage of MTC terminals needs to be enhanced. Therein, types of data which need to be enhanced include uplink and downlink service data for bearing PDSCH and PUSCH and uplink and downlink control signaling for bearing PDCCH and PUCCH. In order to accumulate more energy to improve the coverage, a repetitive transmission method is usually used for transmission enhancement of various types of data. FIG. 4 is schematic diagram of a coverage-enhanced downlink transmission process in the related art. In FIG. 4, oblique line shadow checkers denote PDCCHs, small square checker shadows denote PDSCHs and grey shadows denote PUCCHs. As shown in FIG. 4, downlink allocation information is repetitively transmitted through a PDCCH in a plurality of continuous downlink sub-frames, downlink service data are repetitively transmitted through a PDSCH in a plurality of continuous downlink sub-frames, and HARQ-ACK feedback information is repetitively transmitted through a PUCCH format 1a/1b channel in a plurality of continuous uplink sub-frames. Therein, a spacing between the last sub-frame occupied by the PDCCH and a starting sub-frame occupied by the PDSCH is total $D_1$ ($D_1$ is greater than 0) sub-frames, and a spacing between the last sub-frame occupied by the PDSCH and a starting sub-frame occupied by the PUCCH format 1a/1b channel is total three sub-frames.

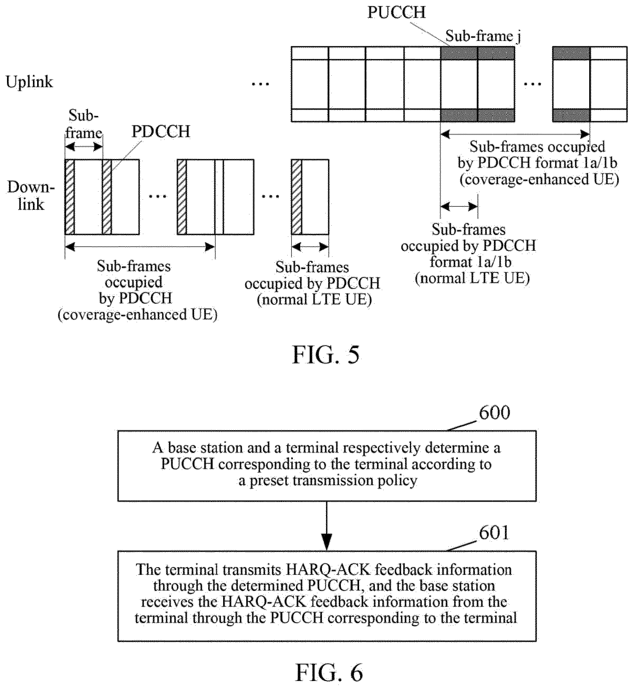

Under the situation that the coverage-enhanced MTC terminal and the normal LTE terminal coexist, if both two types of terminals adopt a mapping rule of implicit PUCCH format 1a/1b channels related to an index of a first CCE occupied by the PDCCH in the related art, a problem of conflict between HARQ-ACK feedback of the coverage-enhanced MTC terminal and the HARQ-ACK of the normal LTE terminal will exist. Specifically, FIG. 5 is a schematic diagram of conflict between a PUCCH format 1a/1b channel of a coverage-enhanced terminal and a PUCCH format 1a/1b channel of a normal LTE terminal in the related art. In FIG. 5, oblique line shadow checkers denote PDCCH and small grey shadows denote PUCCHs. As shown in FIG. 5, a first sub-frame (marked as sub-frame j) in a plurality of sub-frames for transmitting HARQ-ACK feedback information from the coverage-enhanced MTC terminal through the PUCCH format 1a/1b channel is also a sub-frame for transmitting HARQ-ACK feedback information from the normal LTE terminal. If an index of a first CCE occupied by the PDCCH of the coverage-enhanced MTC terminal is the same as an index of a first CCE occupied by the PDCCH of the normal LTE terminal, in the sub-frame j, indexes of PUCCH format 1a/1b channels for bearing the HARQ-ACK feedback information of the coverage-enhanced MTC terminal and the normal LTE terminal are also the same, consequently resulting in a channel conflict. In addition, in addition to the sub-frame j, other sub-frames for transmitting the HARQ-ACK feedback information may also have the similar conflict problem.

For the coverage-enhanced MTC terminal, the related art supports simultaneous transmission of HARQ-ACK feedback information of downlink service data and uplink service data. Specifically, the HARQ-ACK feedback information and the uplink service data are respectively born in determined PUCCH format 1a/1b and PUSCH resources and then are transmitted, or the HARQ-ACK feedback information and the uplink service data share the same PUSCH resource, and are simultaneously born in the determined PUSCH resource and then are transmitted. However, since the transmitting power of the coverage-enhanced MTC terminal is limited and is simultaneously allocated to the HARQ-ACK feedback information and the uplink service data at this moment, the receiving energy of the HARQ-ACK feedback information is caused to be decreased and finally the coverage performance of the HARQ-ACK feedback is influenced.

IPWIRELESS INC: "Backwards compatible support for reduced bandwidth LTE UEs", 3GPP DRAFT; R1-120799, Vol. RAN WG1, 31 January 2012, discloses supporting PUCCH in a reduced bandwidth.

INTEL CORPORATION, "Coverage enhancement of DL/UL control channels for low cost MTC", 3GPP DRAFT, R1-135105. Vol. RAN WG1, no. San Francisco, USA; 13 November 2013, discloses coverage enhancement of DL/UL control channels for low cost MTC.

Summary of the Invention

In order to solve the technical problem, the embodiments of the present invention provides a transmission method and system for HARQ-ACK feedback information, a terminal and a base station, according to the appended claims, to prevent the problem of channel conflict under the situation that a coverage-enhanced MTC terminal and a normal LTE terminal coexist.

In the methods of the embodiments of the present invention, by configuring the proprietary PUCCHs or candidate PUCCH resources for transmitting the HARQ-ACK feedback for the terminal in a coverage-enhanced mode or scenario, the conflict between the HARQ-ACK feedback channels of the coverage-enhanced terminal and the normal LTE terminal is avoided.

In addition, when the HARQ-ACK feedback information and the service data are transmitted on the same sub-frame, the terminal cancels the transmission of the service data and transmits the HARQ-ACK feedback information through the PUCCH determined according to the methods of the embodiments of the present invention or the PUSCH channel resources bearing the service data; and simultaneously the service data is adaptively repetitively transmitted. Hence, the coverage performance of the HARQ-ACK feedback is guaranteed.

Brief Description of Drawings

The drawings described here are used for providing further understanding about the present invention and constitute a part of the present application. The exemplary embodiments of the present invention and the description thereof are used for explaining the present invention instead of improperly limiting the present invention. In the drawings,

FIG. 1 is a schematic diagram of a multiplexing relationship between PDCCH and PDSCH in a downlink sub-frame in the related art;

FIG. 2 is a schematic diagram of mapping from PUCCH resources to physical resource blocks in an uplink sub-frame in the related art;

FIG. 3 is a schematic diagram of PUCCH resource type division in the related art;

FIG. 4 is a schematic diagram of a coverage-enhanced downlink transmission process in the related art;

FIG. 5 is a schematic diagram of conflict between a PUCCH format 1a/1b channel of a coverage-enhanced terminal and a PUCCH format 1a/1b channel of a normal LTE terminal in the related art;

FIG. 6 is a flowchart of a transmission method for HARQ-ACK feedback information provided by the embodiment of the present invention;

FIG. 7 is a schematic diagram of a component structure of a transmission system for HARQ-ACK feedback information provided by the embodiment of the present invention;

FIG. 8 is a schematic diagram of positions of preset N PUCCHs in embodiment 1 of the present invention;

FIG. 9 is a schematic diagram of positions of preset N PUCCHs in embodiment 2 of the present invention;

FIG. 10 is a schematic diagram of sub-frame and CCE resources occupied by a PDCCH in the embodiment of the present invention;

FIG. 11 is a schematic diagram of transmission of HARQ-ACK feedback information through uplink sub-frames with service data transmission in embodiment 9 of the present invention;

FIG. 12 is a schematic diagram of transmission of HARQ-ACK feedback information through uplink sub-frames with service data transmission in embodiment 10 of the present invention.

Preferred Embodiments of the Invention

The embodiments of the present invention will be described below in detail in combination with the drawings. It needs to be stated that the embodiments in the present application and the features in the embodiments can be freely combined under the situation of no conflict.

FIG. 6 is a flowchart of a transmission method for HARQ-ACK feedback information provided by the embodiment of the present invention. As shown in FIG. 6, when a base station determines that a terminal is in a coverage-enhanced scenario, the method further includes the following steps:

In Step 600, a base station and a terminal respectively determine a PUCCH corresponding to the terminal according to a preset transmission policy, herein, the transmission policy can be:

the base station transmits PUCCH indication signaling to the terminal, the indication signaling carries information of one PUCCH of preset N PUCCHs, the PUCCH is a PUCCH corresponding to the terminal, herein N is a positive integer greater than or equal to 2;

or determine a PUCCH corresponding to the terminal according to preset resources;

or determine a preset terminal-specific PUCCH to be a PUCCH corresponding to the terminal.

In this step, the terminal is in the coverage-enhanced scenario under the following situations:

the terminal is defaulted or always works in a coverage-enhanced mode;

or by measuring receiving power or receiving quality when a reference signal or a synchronizing signal transmitted by the base station reaches the terminal, the terminal judges that the receiving power or the receiving quality is lower than a determined threshold, and the terminal enables the coverage-enhanced mode.

In this step, the PUCCH can be a PUCCH format 1/1a/1b channel or a PUCCH format 2/2a/2b channel. Therefore, corresponding operations can be executed subsequently according to different PUCCH formats, i.e., different PUCCH formats correspond to different operations.

In this step, when the transmission policy is that: the base station transmits PUCCH indication signaling to the terminal, when the indication signaling carries information of one PUCCH of preset N PUCCHs (N is a positive integer greater than or equal to 2), the PUCCH is a PUCCH corresponding to the terminal:

the preset N PUCCHs can be continuous or discontinuous.

More preferably, when the PUCCH is the PUCCH format 1/1a/1b channel, the preset N PUCCHs are N PUCCH format 1/1a/1b channels of $N_{PUCCH}^{(1)}$ PUCCH format 1/1a/1b channels indexed from 0 to $N_{PUCCH}^{(1)}$-1, and the first PUCCH of the preset N PUCCHs is a PUCCH 1/1a/1b channel indexed as 0; or a PUCCH format 1/1a/1b channel indexed as $N_{PUCCH}^{(1)}$-1; or a PUCCH format 1/1a/1b channel indexed as $Q^{(1)}$, herein $Q^{(1)}$ is the number of PUCCH format 1/1a/1b channels included in hybrid PUCCH resources indexed as $N_{RB}^{(2)}$.

Here, since the $N_{PUCCH}^{(1)}$ PUCCH format 1/1a/1b channels indexed from 0 to $N_{PUCCH}^{(1)}$-1 are not used for an implicit PUCCH mapping process related to HARQ-ACK feedback of a normal LTE terminal, i.e., it is not related to indexes of CCEs occupied by the PDCCH of the normal LTE terminal, the embodiment of the present invention selects the preset N PUCCHs from the $N_{PUCCH}^{(1)}$ PUCCH format 1/1a/1b channels as candidate PUCCHs for transmitting HARQ-ACK feedback of the coverage-enhanced terminal, and thus the mutual conflict between the HARQ-ACK feedback channels of the coverage-enhanced terminal and the normal LTE terminal is avoided.

More preferably, when the PUCCH is the PUCCH format 2/2a/2b channel, the preset N PUCCHs are N PUCCH format 2/2a/2b channels of all PUCCH format 2/2a/2b channels, and the first PUCCH of the preset N PUCCHs is a PUCCH format 2/2a/2b channel indexed as 0; or a PUCCH format 2/2a/2b channel indexed as $N_{PUCCH,max}^{(2)}$-1, herein $N_{PUCCH,max}^{(2)}$ is a total number of PUCCH format 2/2a/2b channels; or a PUCCH format 2/2a/2b channel indexed as $N_{PUCCH,max}^{(2)}$-$Q^{(2)}$-1, herein $Q^{(2)}$ is the number of PUCCH format 2/2a/2b channels included in hybrid PUCCH resources indexed as $N_{RB}^{(2)}$

In the existing LTE system, PUCCH format 1/2a/2b channels are not used for transmitting the HARQ-ACK feedback information. Therefore, the embodiment of the present invention selects the preset N PUCCHs from the $N_{PUCCH,max}^{(2)}$ PUCCH format 2/2a/ab channels as candidate PUCCHs for transmitting the HARQ-ACK feedback of the coverage-enhanced terminal, and thus the mutual conflict between the HARQ-ACK feedback channels of the coverage-enhanced terminal and the normal LTE terminal is also avoided.

More preferably, when the preset N PUCCHs are discontinuous PUCCH format 1/1a/1b channels, a spacing between two adjacent PUCCHs of the preset N PUCCHs is determined according to at least one of the following parameters:
the number N of the preset PUCCHs, an implicit mapping offset $N_{PUCCH}^{(1)}$ and the number $Q^{(1)}$ of PUCCH format 1/1a/1b channels included in hybrid PUCCH resources indexed as $N_{RB}^{(2)}$.

For example, the spacing between two adjacent PUCCHs of the preset N PUCCHs can be determined by using a formula (1) or (2):

$$I = ceiling\left(\frac{N_{PUCCH}^{(1)}}{N-1}\right) - 1 \qquad (1)$$

$$I = ceiling\left(\frac{N_{PUCCH}^{(1)} - Q^{(1)}}{N-1}\right) - 1 \qquad (2)$$

In formula (1) or (2), I denotes the spacing between two adjacent PUCCHs and ceiling denotes an operation of rounding up to integer.

By the way of determining the PUCCHs through formula (1) or (2), the preset N PUCCHs can be uniformly scattered in $N_{PUCCH}^{(1)}$ PUCCH format 1/1a/1b channels indexed from 0 to $N_{PUCCH}^{(1)}$-1 or in $N_{PUCCH}^{(1)}$-$Q^{(1)}$ PUCCH format 1/1a/1b channels indexed from $Q^{(1)}$ to $N_{PUCCH}^{(1)}$-1, the situation that different channels of the preset N PUCCHs multiplex on the same PUCCH resources by means of code division is avoided, thus the mutual interference between the HARQ-ACK feedback channels of different coverage-enhanced terminals is reduced and finally the coverage performance of the HARQ-ACK feedback information is improved.

More preferably, when the preset N PUCCHs are discontinuous PUCCH format 2/2a/2b channels, a spacing between two adjacent PUCCHs of the preset N PUCCHs is determined according to at least one of the following parameters:
the number N of the preset PUCCHs, the total number $N_{PUCCH,max}^{(2)}$ of PUCCH format 2/2a/2b channels and the number $Q^{(2)}$ of PUCCH format 2/2a/2b channels included in hybrid PUCCH resources indexed as $N_{RB}^{(2)}$.

For example, the spacing between two adjacent PUCCHs of the preset N PUCCHs can be determined by using a formula (3) or (4):

$$I = ceiling\left(\frac{N_{PUCCH,max}^{(2)}}{N-1}\right) - 1 \qquad (3)$$

$$I = ceiling\left(\frac{N_{PUCCH,max}^{(2)} - Q^{(2)}}{N-1}\right) - 1 \qquad (4)$$

In formula (3) or (4), I denotes the spacing between two adjacent PUCCHs and ceiling denotes an operation of rounding up to integer.

By the way of determining the PUCCHs through formula (3) or (4), the preset N PUCCHs can be uniformly scattered in $N_{PUCCH,max}^{(2)}$ PUCCH format 2/2a/ab channels indexed from 0 to $N_{PUCCH,max}^{(2)}$-1 or in $N_{PUCCH,max}^{(2)}$-$Q^{(2)}$ PUCCH format 2/2a/2b channels indexed from 0 to $N_{PUCCH,max}^{(2)}$-$Q^{(2)}$-1, the situation that different channels of the preset N PUCCHs multiplex on the same PUCCH resources by means of code division is avoided, thus the mutual interference between the HARQ-ACK feedback channels of different coverage-enhanced terminals is reduced and the coverage performance of the HARQ-ACK feedback is improved.

In this step, the indication signaling is:
Downlink Control Information (DCI) signaling born in a Physical Downlink Control Channel (PDCCH) or Radio Resource Control (RRC) signaling born in a Physical Downlink Shared Channel (PDSCH), wherein the RRC signaling born in the PDSCH includes signaling born in Msg2 or Msg4 related to a random access process.

Therein, the DCI signaling includes DCI signaling for indicating a PUCCH for transmitting HARQ-ACK feedback information or DCI signaling for resource allocation of PDSCHs; and a DCI format is a proprietary DCI format of the coverage-enhanced terminal.

Therein, the DCI signaling is dynamic configuration signaling, i.e., before each time of executing PDSCH transmission, the terminal needs to firstly decode the DCI signaling related to this PDSCH transmission from the PDCCH to acquire the resource allocation information for this PDSCH transmission and a PUCCH position for transmitting the HARQ-ACK feedback information.

Therein, the RRC signaling is semi-static configuration signaling, i.e., after the terminal receives the RRC signaling for indicating the PUCCH for transmitting the HARQ-ACK feedback, the HARQ-ACK feedback related to all PDSCH transmission is transmitted on the PUCCH indicated by the RRC signaling, till the terminal receives new RRC signaling for indicating the PUCCH for transmitting the HARQ-ACK feedback information.

In this step, the indication signaling includes a ceiling ($\log_2 N$) bit number, wherein ceiling denotes an operation of rounding up to integer.

Through the transmission way of the indication signaling in the embodiment of the present invention, the allocation flexibility of the preset N PUCCHs is increased, the reduction and the avoidance of interference with the HARQ-ACK feedback are facilitated, and the coverage performance of the HARQ-ACK feedback is improved.

In this step, when the transmission policy is "determining a PUCCH corresponding to the terminal according to preset resources":

the preset resources include at least one of follows:

Control Channel Elements (CCEs) occupied by PDCCH, the number of CCEs occupied by PDCCH, sub-frames occupied by PDCCH, the number of sub-frames occupied by PDCCH, sub-frames occupied by PUCCH, the number of sub-frames occupied by PUCCH, sub-frames occupied by PDSCH, the number of sub-frames occupied by PDSCH, Physical Resource Blocks (PRBs) occupied by PDSCH, the number of PRBs occupied by PDSCH and an identification of the terminal.

Therein, the step of determining a PUCCH corresponding to the terminal according to preset resources includes:

acquiring a reference PUCCH;
determining a PUCCH offset according to the acquired reference PUCCH and the preset resources; and determining the PUCCH by using formula (5):

$$n = N_{ref} + N_{Offset} \qquad (5)$$

In formula (5), n denotes the index of PUCCH, $N_{ref}$ denotes the index of reference PUCCH and $N_{Offset}$ denotes the PUCCH offset.

Therein, acquiring a reference PUCCH includes:

when the PUCCH is the PUCCH format 1/1a/1b, acquiring the reference PUCCH as a PUCCH format 1/1a/1b channel indexed as 0; or a PUCCH format 1/1a/1b channel indexed as $N_{PUCCH}^{(1)}-1$; or a PUCCH format 1/1a/1b channel indexed as $Q^{(1)}$; and when the PUCCH is the PUCCH format 2/2a/2b, acquiring the reference PUCCH as a PUCCH format 2/2a/2b channel indexed as 0; or a PUCCH format 2/2a/2b channel indexed as $N_{PUCCH,max}^{(2)}-1$; or a PUCCH format 2/2a/2b channel indexed as $N_{PUCCH,max}^{(2)}-Q^{(2)}-1$.

Therein, the step of determining the PUCCH offset according to the acquired reference PUCCH and the preset resources includes: determining a direction of the PUCCH offset according to the acquired reference PUCCH; and determining a magnitude of the PUCCH offset according to the preset resources. Therein,

the step of determining a direction of the PUCCH offset according to the acquired reference PUCCH includes:

when the acquired reference PUCCH is a PUCCH format 1/1a/1b channel indexed as 0, or a PUCCH format 2/2a/2b channel indexed as 0 or a PUCCH format 1/1a/1b channel indexed as $Q^{(1)}$, determining the direction of the PUCCH offset to be positive; and when the acquired reference PUCCH is a PUCCH format 1/1a/1b channel indexed as $N_{PUCCH}^{(1)}-1$, or a PUCCH format 2/2a/2b channel indexed as $N_{PUCCH,max}^{(2)}-1$ or a PUCCH format 2/2a/2b channel indexed as $N_{PUCCH,max}^{(2)}-Q^{(2)}-1$, determining the direction of the PUCCH offset to be negative.

The step of determining a magnitude of the PUCCH offset according to the preset resources includes:

determining the magnitude of the PUCCH offset according to an index of the first sub-frame occupied by the PDCCH; or according to an index of the first CCE occupied by the PDCCH and the number of the CCEs; or according to the number of the sub-frames occupied by the PDCCH; or according to the index of the first CCE occupied by the PDCCH, the index of the first sub-frame, the number of the CCEs and the number of the sub-frames; or according to the number of the sub-frames occupied by the PUCCH; or according to the number of the sub-frames occupied by the PDSCH; or according to the identification of the terminal.

Since the $N_{PUCCH}^{(1)}$ PUCCH format 1/1a/1b channels indexed from 0 to $N_{PUCCH}^{(1)}-1$ are not used for an implicit PUCCH mapping process related to HARQ-ACK feedback of the normal LTE terminal, i.e., it is not related to indexes of CCEs occupied by the PDCCH of the normal LTE terminal, and the PUCCH format 2/2a/2b channels of the existing LTE system are not used for transmitting the HARQ-ACK feedback information, the embodiment of the present invention directly selects one PUCCH from the $N_{PUCCH}^{(1)}$ PUCCH format 1/1a/1b channels or $N_{PUCCH,max}^{(2)}$ PUCCH format 2/2a/2b channels according to the preset resources as a PUCCH for transmitting HARQ-ACK feedback of the coverage-enhanced terminal, and thus the conflict between the HARQ-ACK feedback channels of the coverage-enhanced terminal and the normal LTE terminal is avoided.

In this step, when the transmission policy is determining the preset terminal-specific PUCCH to be the PUCCH corresponding to the terminal, it includes:

a PUCCH format 1/1a/1b channel indexed as 0;

or a PUCCH format 1/1a/1b channel indexed as $N_{PUCCH}^{(1)}$-1; or a PUCCH format 1/1a/1b channel indexed as $Q^{(1)}$; or a PUCCH format 2/2a/2b channel indexed as 0; or a PUCCH format 2/2a/2b channel indexed as $N_{PUCCH,max}^{(2)}$-1; or a PUCCH format 2/2a/2b channel indexed as $N_{PUCCH,max}^{(2)}$-$Q^{(2)}$ -1.

Since the $N_{PUCCH}^{(1)}$ PUCCH format 1/1a/1b channels indexed from 0 to $N_{PUCCH}^{(1)}$-1 are not used for an implicit PUCCH mapping process related to HARQ-ACK feedback of the normal LTE terminal, i.e., it is not related to indexes of CCEs occupied by the PDCCH of the normal LTE terminal, and the PUCCH format 2/2a/2b channels of the existing LTE system are not used for transmitting the HARQ-ACK feedback information, the embodiment of the present invention directly selects one fixed PUCCH from the $N_{PUCCH}^{(1)}$ PUCCH format 1/1a/1b channels or $N_{PUCCH,max}^{(2)}$ PUCCH format 2/2a/2b channels as a specific PUCCH for transmitting HARQ-ACK feedback of all coverage-enhanced terminals, and thus the conflict between the HARQ-ACK feedback channels of the coverage-enhanced terminal and the normal LTE terminal is avoided. In needs to be stated that each uplink sub-frame at this moment only supports the HARQ-ACK feedback of at most one coverage-enhanced terminal.

In Step 601, the terminal transmits HARQ-ACK feedback information through the determined PUCCH, and the base station receives the HARQ-ACK feedback information from the terminal through the PUCCH corresponding to the terminal.

In this step, when the PUCCH is the PUCCH format 2/2a/2b channel, the terminal transmits the HARQ-ACK feedback information in the form of PUCCH format 2 through the determined PUCCH format 2/2a/2b channel, and the base station receives the HARQ-ACK feedback information from the terminal in the form of PUCCH format 2 through the PUCCH format 2/2a/2b channel corresponding to the terminal.

In the method provided by the embodiment of the present invention, by configuring the proprietary PUCCHs or candidate PUCCHs for transmitting the HARQ-ACK feedback for the terminal in the coverage-enhanced mode or scenario, the conflict between the HARQ-ACK feedback channels of the coverage-enhanced terminal and the normal LTE terminal is avoided.

The method provided by the embodiment of the present invention further includes that:

when the HARQ-ACK feedback information and service data are transmitted on the same sub-frame,

the terminal cancels the transmission of the service data, and transmits the HARQ-ACK feedback information through the PUCCH determined according to the method of the embodiment of the present invention or PUSCH resources bearing the service data; and correspondingly, the base station receives the HARQ-ACK feedback information through the PUCCH determined according to the method of the embodiment of the preset invention or PUSCH resources bearing the service data.

Therein, transmitting the HARQ-ACK feedback information through the PUSCH resources bearing the service data includes: transmitting the HARQ-ACK feedback information according to the way of transmitting service data through the PUSCH; or selecting a PRB pair from resources corresponding to the PUSCH bearing the service data, and transmitting the HARQ-ACK feedback information by means of a PUCCH format 1a/1b. Through the way of canceling the transmission of the service data in the present invention, the coverage performance of the HARQ-ACK feedback is guaranteed.

More preferably, when the HARQ-ACK feedback information and the service data are transmitted on the same sub-frame, the terminal transmits the service data according to the number of sub-frames after addition; or after the service data are transmitted, adaptively repetitively transmits the service data; or according to the number of sub-frames for simultaneously transmitting the HARQ-ACK feedback information and the service data, determines whether to adaptively repetitively transmit the service data after the service data are transmitted. Correspondingly, the base station receives the service data according to the number of sub-frames after addition; or after the service data are transmitted, receives the service data according to a way of adaptively repetitively transmitting; or according to the number of sub-frames for simultaneously transmitting the HARQ-ACK feedback information and the service data, determines whether to receive the service data according to the way of adaptively repetitively transmitting after the service data are transmitted.

Through the above-mentioned method, the coverage performance of the HARQ-ACK feedback is guaranteed and simultaneously the coverage performance of the service data is also guaranteed.

In the method provided by the embodiment of the present invention, by canceling the transmission of the service data when the HARQ-ACK feedback information and the service data are transmitted on the same sub-frame, the coverage performance of the HARQ-ACK feedback is guaranteed.

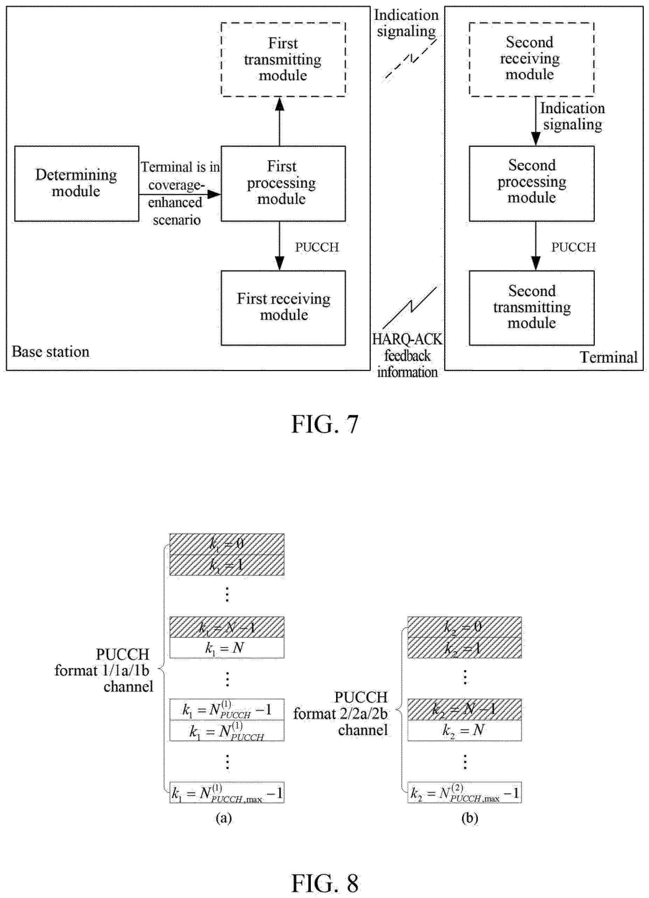

FIG. 7 is a schematic diagram of a component structure of a transmission system for HARQ-ACK feedback information provided by the embodiment of the present invention. As shown in FIG. 7, the transmission system at least includes a base station and a terminal, wherein,

the base station is configured to, when determining that the terminal is in a coverage-enhanced scenario, determine a PUCCH corresponding to the terminal according to a preset transmission policy; and receive HARQ-ACK feedback information through the PUCCH corresponding to the terminal; and

the terminal is configured to determine a PUCCH corresponding to the terminal according to a preset transmission policy; and transmit HARQ-ACK feedback information through the determined PUCCH;

herein the transmission policy can be:

the base station transmits PUCCH indication signaling to the terminal, the indication signaling carries information of one PUCCH of preset N PUCCHs, the one PUCCH is a PUCCH corresponding to the terminal, herein N is a positive integer greater than or equal to 2;

or determines a PUCCH corresponding to the terminal according to preset resources;

or determines a preset terminal-specific PUCCH to be a PUCCH corresponding to the terminal.

The base station in the system provided by the embodiment of the present invention at least includes a determining module, a first processing module and a first receiving module, herein,

the determining module is configured to, when determining that the terminal is in a coverage-enhanced scenario, notify the first processing module;

the first processing module is provided with the transmission policy and is configured to determine the PUCCH corresponding to the terminal according to the transmission policy; and

the first receiving module is configured to receive the HARQ-ACK feedback information from the terminal through the PUCCH corresponding to the terminal; and

the terminal at least includes a second processing module and a second transmitting module, herein,

the second processing module is provided with the transmission policy and is configured to determine the PUCCH corresponding to the terminal according to the transmission policy; and

the second transmitting module is configured to transmit the HARQ-ACK feedback information through the determined PUCCH.

Therein, the base station further includes a first transmitting module configured to receive a notification from the first processing module and transmit PUCCH indication information to the terminal; and correspondingly,

the terminal further includes a second receiving module configured to receive the indication signaling from the base station and output the indication signaling to the second processing module.

Therein, the PUCCH can be a PUCCH format 1/1a/1b channel or a PUCCH format 2/2a/2b channel.

The embodiment of the present invention further provides a computer program, comprising program instructions, herein when the program instructions are executed by a base station, the base station is enabled to execute the above mentioned method.

The embodiment of the present invention further provides a computer program, comprising program instructions, herein when the program instructions are executed by a terminal, the terminal is enabled to execute the above mentioned method.

The embodiment of the present invention further provides a carrier carrying any one of the computer programs.

The method of the present invention will be described below in detail in combination with the specific embodiments.

FIG. 8 is a schematic diagram of positions of preset N PUCCHs in embodiment 1 of the present invention. As shown in FIG. 8, in embodiment 1, it is supposed that the preset N PUCCHs are continuous, herein N is a positive integer greater than or equal to 2.

In FIG. 8(a), it is supposed that the PUCCHs are PUCCH format 1/1a/1b channels, herein an index of the first PUCCH is 0 and indexes of other (N-1) PUCCHs are respectively 1 to (N-1), as shown by oblique line shadows in FIG. 8(a); and in FIG. 8(b), it is supposed that the PUCCHs are PUCCH format 2/2a/2b channels, herein an index of the first PUCCH is 0 and indexes of other (N-1) PUCCHs are respectively 1 to (N-1), as shown by oblique line shadows in FIG. 8(b). It needs to be stated that the first PUCCH of the N continuous PUCCHs is not limited to the PUCCH format 1/1a/1b channel or PUCCH format 2/2a/2b channel indexed as 0. For example, the first PUCCH of the N continuous PUCCHs can also be a PUCCH format 1/1a/1b channel indexed as $N_{PUCCH}^{(1)}$-1, correspondingly indexes of other (N-1) PUCCHs are respectively $N_{PUCCH}^{(1)}$-2 to $N_{PUCCH}^{(1)}$-N; or the first PUCCH of the N continuous PUCCHs can also be a PUCCH format 1/1a/1b channel indexed as $Q^{(1)}$, correspondingly indexes of other (N-1) PUCCHs are respectively $Q^{(1)}$+1 to $Q^{(1)}$+N-1; or the first PUCCH of the N continuous PUCCHs can also be a PUCCH format 2/2a/2b channel indexed as $N_{PUCCH,max}^{(2)}$-1, correspondingly indexes of other (N-1) PUCCHs are respectively $N_{PUCCH,max}^{(2)}$-2 to $N_{PUCCH,max}^{(2)}$-N; or the first PUCCH of the N continuous PUCCHs can also be a PUCCH format 2/2a/2b channel indexed as $N_{PUCCH,max}^{(2)}$-$Q^{(2)}$-1, correspondingly indexes of other (N-1) PUCCHs are respectively $N_{PUCCH,max}^{(2)}$-$Q^{(2)}$-2 to $N_{PUCCH,max}^{(2)}$-$Q^{(2)}$-N.

According to the signaling from the base station, the terminal determines that which one of the preset N PUCCHs is to be used to transmit the HARQ-ACK feedback information.

Through the preset N PUCCHs, the base station and the terminal can simply acquire the transmission parameters and indexes of the preset N PUCCHs, such that the implementation is simplified and the satisfaction of the low cost demand of the coverage-enhanced terminal is facilitated.

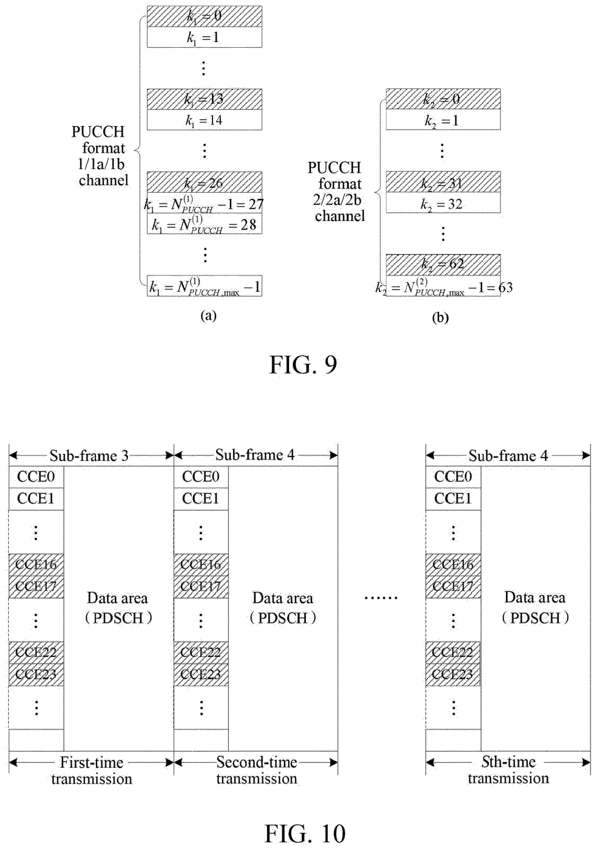

FIG. 9 is a schematic diagram of positions of preset N PUCCHs in embodiment 2 of the present invention. As shown in FIG. 9, in embodiment 2, it is supposed that the preset N PUCCHs are discontinuous, herein N is a positive integer greater than or equal to 2.

In FIG. 9(a), it is supposed that the PUCCHs are PUCCH format 1/1a/1b channels, N is equal to 3 and $N_{PUCCH}^{(1)}$ is equal to 28, then an index of the first PUCCH of 3 (N=3) PUCCHs is 0 and indexes of other two PUCCHs are respectively 13 and 26, as shown by oblique line shadows in FIG. 9(a); a spacing between two adjacent channels is 13, i.e., the following condition is satisfied:

$$I = ceiling\left(\frac{N_{PUCCH}^{(1)}}{N-1}\right) - 1 = ceiling\left(\frac{28}{3-1}\right) - 1 = 13,$$

herein I denotes a spacing between two adjacent PUCCHs and ceiling denotes an operation of rounding up to integer.

Specifically, in FIG 9(b), it is supposed that the PUCCHs are PUCCH format 2/2a/2b channels, N is equal to 3 and $N_{PUCCH,max}^{(2)}$ is equal to 64, as shown in oblique line shadows in FIG. 9(b), then an index of the first PUCCH of 3 (N=3) PUCCHs is 0, and indexes of other two PUCCHs are respectively 31 and 62; and a spacing between two adjacent channels is 31, i.e., the following condition is satisfied:

$$I = ceiling\left(\frac{N_{PUCCH,max}^{(2)}}{N-1}\right) - 1 = ceiling\left(\frac{64}{3-1}\right) - 1 = 31,$$

herein I denotes a spacing between two adjacent PUCCHs and ceiling denotes an operation of rounding up to integer.

It needs to be stated, in this embodiment, the first PUCCH of the N discontinuous PUCCHs is not limited to the PUCCH format 1/1a/1b channel or PUCCH format 2/2a/2b channel indexed as 0. For example, the first PUCCH of the N discontinuous PUCCHs can also be a PUCCH format 1/1a/1b channel indexed as $N_{PUCCH}^{(1)}$-1, indexes of other (N-1) PUCCHs are less than $N_{PUCCH}^{(1)}$-1 and a spacing between two adjacent channels is determined through formula (1); or the first PUCCH of the N discontinuous PUCCHs can also be a PUCCH format 1/1a/1b channel indexed as $Q^{(1)}$, indexes of other (N-1) PUCCHs are greater than $Q^{(1)}$ and a spacing between two adjacent channels is determined through formula (2); or the first PUCCH of the N discontinuous PUCCHs can also be a PUCCH format 2/2a/2b channel indexed as $N_{PUCCH,max}^{(2)}$-1, indexes of other (N-1) PUCCHs are less than $N_{PUCCH,max}^{(2)}$-1 and a spacing between two adjacent channels is determined through formula (3); or the first PUCCH of the N discontinuous PUCCHs can also be a PUCCH format 2/2a/2b channel indexed as $N_{PUCCH,max}^{(2)}$-$Q^{(2)}$-1, indexes of other (N-1) PUCCHs are less than $N_{PUCCH,max}^{(2)}$-$Q^{(2)}$-1 and a spacing between two adjacent channels is determined through formula (4).

According to the signaling from the base station, the terminal determines that which one of the preset N PUCCHs is to be used to transmit the HARQ-ACK feedback information.

Through the preset N discontinuous PUCCHs which are uniformly distributed, the situation that different channels of the preset N PUCCHs multiplex on the same PUCCH resources by means of code division is avoided, thus the mutual interference between the HARQ-ACK feedbacks of different coverage-enhanced terminals is reduced and the coverage performance of the HARQ-ACK feedback is improved.

In the existing LTE system, since the $N_{PUCCH}^{(1)}$ PUCCH format 1/1a/1b channels indexed from 0 to $N_{PUCCH}^{(1)}$-1 are not used for an implicit PUCCH mapping process related to HARQ-ACK feedback of the normal LTE terminal, it is not related to indexes of CCEs occupied by the PDCCH of the normal LTE terminal and the PUCCH format 2/2a/2b channels are not used for transmitting the HARQ-ACK feedback information, the embodiment of the present invention selects the preset N PUCCHs from the $N_{PUCCH}^{(1)}$ PUCCH format 1/1a/1b channels or the $N_{PUCCH,max}^{(2)}$ PUCCH format 2/2a/2b channels as candidate PUCCHs for transmitting the HARQ-ACK feedback of the coverage-enhanced terminal, and thus the conflict between the HARQ-ACK feedback channels of the coverage-enhanced terminal and the normal LTE terminal is avoided.

FIG. 10 is a schematic diagram of sub-frames and CCEs occupied by a PDCCH in the embodiment of the present invention. As shown in FIG. 10, specifically, at a determined coverage level, to view from a sub-frame dimension, the PDCCH occupies totally S continuous sub-frames and an index of the first sub-frame is 3, or downlink allocation is repetitively transmitted for S times through the PDCCH; to view from a CCE dimension, the PDCCH occupies totally eight continuous CCEs and an index of the first CCE is 16, as shown by oblique line shadows in FIG. 10. It needs to be stated that, since a wireless frame of the existing LTE system includes 10 sub-frames, the indexes of the sub-frames range from 0 to 9.

Embodiment 3: it is supposed that the PUCCH for transmitting the HARQ-ACK feedback is a format 1/1a/1b channel and the reference PUCCH is a format 1/1a/1b channel indexed as 0. Thus,

firstly, a direction of a PUCCH offset is determined to be positive "+";

then, according to the index of the first sub-frame occupied by the PDCCH, a magnitude of the PUCCH offset is determined to be $|N_{Offset}|$, herein $|.|$ denotes an operation of taking absolute value or magnitude. For example, the magnitude of the PUCCH can be determined through formula (6):

$$\left| N_{Offset} \right| = \mathrm{mod}\left( C_1 \cdot s_f, N_{PUCCH}^{(1)} \right) \qquad (6),$$

in formula (6), $S_f$ denotes an index of the first sub-frame occupied by PDCCH, $C_1$ denotes a determined constant factor and mod denotes an operation of taking remainder;

finally, the PUCCH is determined through formula (5).

In embodiment 3, $N_{ref} = 0$, $N_{offset} = + |N_{Offset}|$.

Both the terminal and the base station transmit the HARQ-ACK feedback information through the PUCCH format 1/1a/1b channel indexed as $|N_{Offset}|$ ($n=0+|N_{Offset}|$).

Embodiment 4: it is supposed that the PUCCH for transmitting the HARQ-ACK feedback is a format 1/1a/1b channel and the reference PUCCH is a format 1/1a/1b channel indexed as $N_{PUCCH}^{(1)}$-1. Thus,

firstly, a direction of a PUCCH offset is determined to be negative "-";

then, according to the index of the first sub-frame occupied by the PDCCH, a magnitude of the PUCCH offset is determined to be $|N_{Offset}|$, herein $|.|$ denotes an operation of taking absolute value or magnitude. For example, the magnitude of the PUCCH can be determined through formula (6);

finally, the PUCCH is determined through formula (5).

In embodiment 4,

$$N_{ref} = N_{PUCCH}^{(1)} - 1, \ N_{Offset} = -\left| N_{Offset} \right|.$$

Both the terminal and the base station transmit the HARQ-ACK feedback information through the PUCCH format 1/1a/1b channel indexed as $N_{PUCCH}^{(1)}$-1-$|N_{Offset}|$ (i.e., $n=N_{PUCCH}^{(1)}$-1-$|N_{Offset}|$).

Embodiment 5: it is supposed that the PUCCH for transmitting the HARQ-ACK feedback is a format 1/1a/1b channel and the reference PUCCH is a format 1/1a/1b channel indexed as $Q^{(1)}$. Thus,

firstly, a direction of a PUCCH offset is determined to be positive "+";

then, according to the index of the first sub-frame occupied by the PDCCH, a magnitude of the PUCCH offset is determined to be $|N_{Offset}|$, herein $|.|$ denotes an operation of taking absolute value or magnitude. For example, the magnitude of the PUCCH can be determined through formula (7):

$$\left|N_{Offset}\right| = \mathrm{mod}\left(C_1 \cdot s_f, N_{PUCCH}^{(1)} - Q^{(1)}\right) \quad (7),$$

in formula (7), $S_f$ denotes an index of the first sub-frame occupied by PDCCH, $C_1$ denotes a determined constant factor and mod denotes an operation of taking remainder;

finally, the PUCCH is determined through formula (5).

In embodiment 3,

$$N_{ref} = Q^{(1)}, \quad N_{Offset} = +\left|N_{Offset}\right|.$$

Both the terminal and the base station transmit the HARQ-ACK feedback information through the PUCCH format 1/1a/1b channel indexed as $Q^{(1)}+|N_{Offset}|$ ($n=Q^{(1)}+|N_{Offset}|$).

Embodiment 6: it is supposed that the PUCCH for transmitting the HARQ-ACK feedback is a format 2/2a/2b channel and the reference PUCCH is a format 2/2a/2b channel indexed as 0. Thus,

firstly, a direction of a PUCCH offset is determined to be positive "+";

then, according to the index of the first sub-frame occupied by the PDCCH, a magnitude of the PUCCH offset is determined to be $|N_{Offset}|$, herein |.| denotes an operation of taking absolute value or magnitude. For example, the magnitude of the PUCCH can be determined through formula (8):

$$\left|N_{Offset}\right| = \mathrm{mod}\left(C_1 \cdot s_f, N_{PUCCH,\max}^{(2)}\right) \quad (8),$$

in formula (8), $S_f$ denotes an index of first sub-frame occupied by PDCCH, $C_1$ denotes a determined constant factor and mod denotes an operation of taking remainder;

finally, the PUCCH is determined through formula (5).

In embodiment 5,

$$N_{ref} = 0, \quad N_{Offset} = +\left|N_{Offset}\right|.$$

Both the terminal and the base station transmit the HARQ-ACK feedback information through the PUCCH format 2/2a/2b channel indexed as $|N_{Offset}|$ (i.e., $n=0+|N_{Offset}|$).

Embodiment 7: it is supposed that the PUCCH for transmitting the HARQ-ACK feedback is a format 2/2a/2b channel and the reference PUCCH is a format 2/2a/2b channel indexed as $N_{PUCCH,\max}^{(2)}-1$. Thus,

firstly, a direction of a PUCCH offset is determined to be negative "-";

then, according to the index of the first sub-frame occupied by the PDCCH, a magnitude of the PUCCH offset is determined to be $|N_{Offset}|$, herein |.| denotes an operation of taking absolute value or magnitude. For example, the magnitude of the PUCCH can be determined through formula (8);

finally, the PUCCH is determined through formula (5). In embodiment 6,

$$N_{ref} = N_{PUCCH,\max}^{(2)} - 1, \quad N_{Offset} = -\left|N_{Offset}\right|.$$

Both the terminal and the base station transmit the HARQ-ACK feedback information through the PUCCH format 2/2a/2b channel indexed as $N_{PUCCH,\max}^{(2)}-1-|N_{Offset}|$ (i.e., $n=N_{PUCCH,\max}^{(2)}-1-|N_{Offset}|$).

Embodiment 8: it is supposed that the PUCCH for transmitting the HARQ-ACK feedback is a format 2/2a/2b channel and the reference PUCCH is a format 2/2a/2b channel indexed as $N_{PUCCH,\max}^{(2)}-Q^{(2)}-1$. Thus,

firstly, a direction of a PUCCH offset is determined to be negative "-";

then, according to the index of the first sub-frame occupied by the PDCCH, a magnitude of the PUCCH offset is determined to be $|N_{Offset}|$, herein |.| denotes an operation of taking absolute value or magnitude. For example, the magnitude of the PUCCH can be determined through formula (9):

$$\left| N_{Offset} \right| = \mathrm{mod}\left( C_1 \cdot s_f, N_{PUCCH,\max}^{(2)} - Q^{(2)} \right) \qquad (9)$$

in formula (9), $S_f$ denotes an index of first sub-frame occupied by PDCCH, $C_1$ denotes a determined constant factor and mod denotes an operation of taking remainder;

finally, the PUCCH is determined through formula (5).

$$N_{ref} = N_{PUCCH,\max}^{(2)} - Q^{(2)} - 1, \quad N_{Offset} = -\left| N_{Offset} \right|.$$

In embodiment 5,

Both the terminal and the base station transmit the HARQ-ACK feedback information through the PUCCH format 2/2a/2b channel indexed as $N_{PUCCH,max}^{(2)}$-$Q^{(2)}$-1-$|N_{Offset}|$ (i.e., n=$N_{PUCCH,max}^{(2)}$-$Q^{(2)}$-1-$|N_{Offset}|$).

It needs to be stated that, for embodiments 3-8, in the step of determining the magnitude $|N_{Offset}|$ of the PUCCH offset according to the index of the first sub-frame occupied by the PDCCH, the magnitude $|N_{Offset}|$ of the PUCCH offset can also be determined according to at least one of other preset resources in addition to the index of the first sub-frame occupied by the PDCCH. Specifically,

for example, the magnitude $|N_{Offset}|$ of the PUCCH offset is determined according to an index of the first CCE occupied by the PDCCH and the number of CCEs and formula (10):

$$\left| N_{Offset} \right| = \mathrm{mod}\left( C_2 \cdot \frac{p_f}{P}, Z \right) \qquad (10),$$

in formula (10), $p_f$ and P respectively denote an index of first CCE occupied by PDCCH and the number of CCEs, $C_2$ denotes a determined constant factor and mod denotes an operation of taking remainder;

for another example, the magnitude $|N_{Offset}|$ of the PUCCH offset is determined according to the number of sub-frames occupied by the PDCCH, the number of sub-frames occupied by the PUCCH or the number of sub-frames occupied by the PDSCH and formula (11):

$$\left| N_{Offset} \right| = \mathrm{mod}\left( C_3 \cdot \frac{S}{C_4}, Z \right) \qquad (11),$$

in formula (11), S denotes the number of sub-frames occupied by PDCCH, the number of sub-frames occupied by PUCCH or the number of sub-frames occupied by PDSCH, $C_3$ and $C_4$ denote determined constant factors and mod denotes an operation of taking remainder;

for another example, the magnitude $|N_{Offset}|$ of the PUCCH offset is determined according to an index of the first CCE occupied by the PDCCH and the number of CCEs, an index of the first sub-frame and the number of sub-frames, and formula (12):

$$\left| N_{Offset} \right| =$$
$$\mathrm{mod}\left( \mathrm{mod}\left( C_1 \cdot s_f, Z \right) + \mathrm{mod}\left( C_2 \cdot \frac{p_f}{P}, Z \right) + \mathrm{mod}\left( C_3 \cdot \frac{S}{C_4}, Z \right), Z \right) \qquad (12),$$

in formula (12), $S_f$ denotes an index of the first sub-frame occupied by PDCCH, $p_f$ and P respectively denote an index of the first CCE occupied by PDCCH and the number of CCEs, S denotes the number of sub-frames occupied by PDCCH, the number of sub-frames occupied by PUCCH or the number of sub-frames occupied by PDSCH, $C_1$, $C_2$, $C_3$ and $C_4$ denote determined constant factors and mod denotes an operation of taking remainder;

for another example, the magnitude $|N_{Offset}|$ of the PUCCH offset is determined according to an identification of the terminal and formula (13):

$$\left| N_{Offset} \right| = \mathrm{mod}\left( id, Z \right) \qquad (13),$$

in formula (13), id denotes an identification of the terminal and mod denotes an operation of taking remainder.

In formulas (10)-(13),
if the reference PUCCH is a PUCCH format 1/1a/1b channel indexed as 0 or $N_{PUCCH}^{(1)}$-1, Z is equal to $N_{PUCCH}^{(1)}$; if the reference PUCCH is a PUCCH format 1/1a/1b channel indexed as $Q^{(1)}$, Z is equal to $N_{PUCCH}^{(1)}$-$Q^{(1)}$-1; if the reference PUCCH is a PUCCH format 2/2a/2b channel indexed as 0 or $N_{PUCCH,max}^{(2)}$-1, Z is equal to $N_{PUCCH,max}^{(2)}$; and if the reference PUCCH is a PUCCH format 2/2a/2b channel indexed as $N_{PUCCH,max}^{(2)}$-$Q^{(2)}$-1, Z is equal to $N_{PUCCH,max}^{(2)}$-$Q^{(2)}$.

Through the above-mentioned method, the control overhead used for notifying the coverage-enhanced terminal about the PUCCH for transmitting the HARQ-ACK feedback is reduced, and the coverage enhancement of the control channel and the improvement of system spectrum efficiency are facilitated.

In the existing LTE system, since the $N_{PUCCH}^{(1)}$ PUCCH format 1/1a/1b channels indexed from 0 to $N_{PUCCH}^{(1)}$-1are not used for an implicit PUCCH mapping process related to HARQ-ACK feedback of the normal LTE terminal, it is not related to indexes of CCEs occupied by the PDCCH of the normal LTE terminal, and the PUCCH format 2/2a/2b channels are not used for transmitting the HARQ-ACK feedback information, the embodiment of the present invention directly selects one PUCCH from the $N_{PUCCH}^{(1)}$ PUCCH format 1/1a/1b channels or from $N_{PUCCH,max}^{(2)}$ PUCCH format 2/2a/2b channels according to the preset resources as a PUCCH for transmitting the HARQ-ACK feedback of the coverage-enhanced terminal, and thus the conflict between the HARQ-ACK feedback channels of the coverage-enhanced terminal and the normal LTE terminal is avoided.

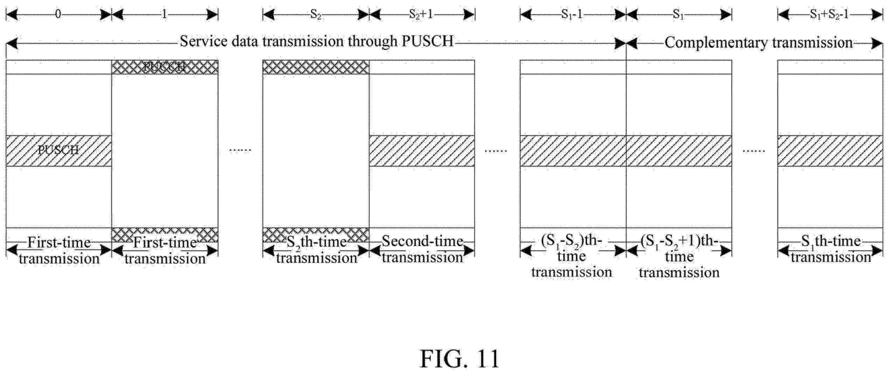

Embodiment 9: FIG. 11 is a schematic diagram of transmission of HARQ-ACK feedback information through uplink sub-frames with service data transmission in embodiment 9 of the present invention, herein oblique line shadow blocks denote PUSCHs and oblique square checker shadow blocks denote PUCCHs. Under this situation, the terminal cancels the transmission of the service data and transmits the HARQ-ACK feedback information through the determined PUCCH.

As shown in FIG. 11, it is supposed that the base station requires the terminal to transmit the service data through the PUSCH within $S_1$ sub-frames whose sequence numbers are from 0 to $(S_1-1)$ as shown in FIG. 11, and simultaneously the terminal further needs to transmit the HARQ-ACK feedback information of downlink data within $S_2$ sub-frames whose sequence numbers are from 1 to $S_2$ of the $S_1$ sub-frames according to HARQ timing.

Therein, $S_1$ denotes the number of sub-frames occupied by the PUSCH for transmitting the service data at a determined coverage level, or times of repetitive transmission of the service data through the PUSCH; and $S_2$ denotes the number of sub-frames occupied by the PUCCH at a determined coverage level or times of repetitive transmission of HARQ-ACK feedback through the PUCCH, and $S_2$ is less than $S_1$.

As shown in FIG. 11, under this situation, within the range of the $S_2$ sub-frames whose sequence numbers are from 1 to $S_2$, the terminal cancels the transmission of the service data transmitted through the PUSCH and transmits the HARQ-ACK feedback information through the determined PUCCH.

Thus, within the range of $S_1$ sub-frames whose sequence numbers are from 0 to $(S_1-1)$, due to the transmission of the HARQ-ACK feedback information, the service data which originally need to be transmitted for $S_1$ times through the PUSCH are actually transmitted only for $(S_1-S_2)$ times. Therefore, within the range of sub-frames whose sequence numbers are from $S_1$ to $(S_1+S_2-1)$, the terminal executes complementary service data transmission through the PUSCH, i.e., finally compensates the coverage loss of the service data by increasing the number of sub-frames for transmitting the service data.

In addition, the way for compensating the coverage loss of the service data is not limited to increasing the number of the sub-frames for transmitting the service data in embodiment 7, and can also be: adaptively repetitively transmitting the service data after the service data are transmitted; or determining whether to adaptively repetitively transmit the service data after the service data are transmitted according to the number of the sub-frames for simultaneously transmitting the HARQ-ACK feedback information and the service data. Therein,

adaptively repetitively transmitting the service data after the service data are transmitted refers to that, without the uplink grant from the base station, the terminal will continuously occupy the subsequent determined sub-frames after one transmission of the service data is completed and adaptively repetitively transmit the service data through the PUSCH. It needs to be stated that the time interval between the first sub-frame of the repetitively transmitted sub-frames and the last sub-frame of the previously transmitted sub-frames can be preset.

Determining whether to adaptively repetitively transmit the service data after the service data are transmitted according to the number of the sub-frames for simultaneously transmitting the HARQ-ACK feedback information and the service data refers to that, for one transmission of the service data, if the number of the sub-frames for simultaneously transmitting the HARQ-ACK feedback information and the service data does not exceed a determined constant L, the terminal will not adaptively repetitively transmit the service data after the service data are transmitted; and otherwise, the terminal will adaptively repetitively transmit the service data after the service data are transmitted, herein L is a positive integer greater than 1.

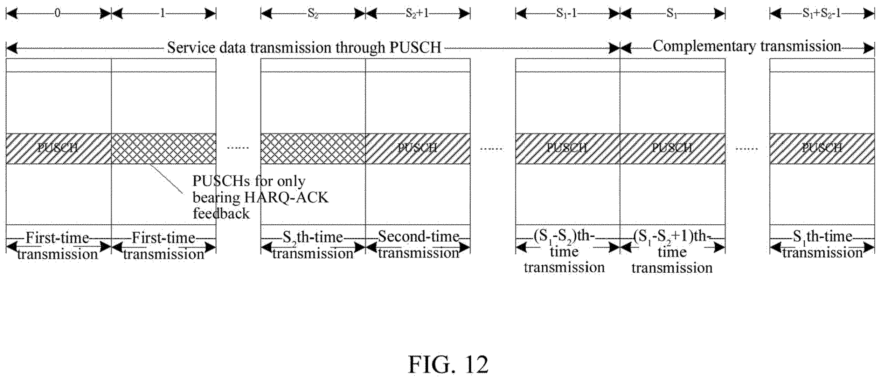

Embodiment 10: FIG. 12 is a schematic diagram of transmission of HARQ-ACK feedback information through uplink sub-frames with service data transmission in embodiment 10 of the present invention, herein oblique line shadow blocks denote PUSCHs and oblique square checker shadow blocks denote PUSCHs for only bearing HARQ-ACK feedback, different from that in embodiment 9, under this situation, the terminal cancels the transmission of the service data and transmits the HARQ-ACK feedback information through the PUSCH resources bearing the service data.

As shown in FIG. 12, it is supposed that the base station requires the terminal to transmit the service data through the PUSCH within $S_1$ sub-frames whose sequence numbers are from 0 to $(S_1-1)$ as shown in FIG. 12, and simultaneously the terminal further needs to transmit the HARQ-ACK feedback information of downlink data within $S_2$ sub-frames whose sequence numbers are from 1 to $S_2$ of the $S_1$ sub-frames according to HARQ timing.

Therein, $S_1$ denotes the number of sub-frames occupied by the PUSCH for transmitting the service data at a determined coverage level, or times of repetitive transmission of the service data through the PUSCH; and $S_2$ denotes the number of sub-frames occupied by the PUSCH at a determined coverage level or times of repetitive transmission of HARQ-ACK feedback through the PUSCH, and $S_2$ is less than $S_1$.

As shown in FIG. 12, under this situation, within the range of the $S_2$ sub-frames whose sequence numbers are from 1 to $S_2$, the terminal cancels the transmission of the service data transmitted through the PUSCH and transmits the HARQ-ACK feedback information through granted PUSCH channel resources.

Thus, within the range of $S_1$ sub-frames whose sequence numbers are from 0 to $(S_1-1)$, due to the transmission of the HARQ-ACK feedback information, the service data which originally need to be transmitted for $S_1$ times through the PUSCH are actually transmitted only for $(S_1-S_2)$ times. Therefore, within the range of sub-frames whose sequence numbers are from $S_1$ to $(S_1+S_2-1)$, the terminal executes complementary service data transmission through the PUSCH, i.e., finally compensates the coverage loss of the service data by increasing the number of sub-frames for transmitting the service data.

In addition, the way for compensating the coverage loss of the service data is not limited to increasing the number of the sub-frames for transmitting the service data in embodiment 10, and can also be: adaptively repetitively transmitting the service data after the service data are transmitted; or determining whether to adaptively repetitively transmit the service data after the service data are transmitted according to the number of the sub-frames for simultaneously transmitting the HARQ-ACK feedback information and the service data. Therein,

adaptively repetitively transmitting the service data after the service data are transmitted refers to that, without the uplink grant from the base station, the terminal will continuously occupy the subsequent determined sub-frames after one transmission of the service data is completed and adaptively repetitively transmit the service data through the PUSCH. It needs to be stated that the time interval between the first sub-frame of the repetitively transmitted sub-frames and the last sub-frame of the previously transmitted sub-frames can be preset.

Determining whether to adaptively repetitively transmit the service data after the service data are transmitted according to the number of the sub-frames for simultaneously transmitting the HARQ-ACK feedback information and the service data refers to that, for one transmission of the service data, if the number of the sub-frames for simultaneously transmitting the HARQ-ACK feedback information and the service data does not exceed a determined constant L, the terminal will not adaptively repetitively transmit the service data after the service data are transmitted; and otherwise, the terminal will adaptively repetitively transmit the service data after the service data are transmitted, herein L is a positive integer greater than 1.

Therein, the way for transmitting the HARQ-ACK feedback through PUSCH resources includes: transmitting the HARQ-ACK feedback information according to the way of for transmitting the service data through the PUSCH; or selecting a PRB pair from resources corresponding to the PUSCH, and transmitting the HARQ-ACK feedback information by means of a PUCCH format 1a/1b. Therein, transmitting the HARQ-ACK feedback information according to the way of transmitting the service data through the PUSCH includes:

approach 1: when transmitted HARQ-ACK bits are 0, repetitively transmitting one of BPSK (Binary Phase Shift Keying) modulated symbols on all RE (Resource Elements) included in PUSCH resources; and otherwise, repetitively transmitting the other one of BPSK modulated symbols on all REs included in the PUSCH resources. Correspondingly, the base station can receive the HARQ-ACK feedback information according to a maximum likelihood detection algorithm.

approach 2: after sequentially performing repetitive coding and BPSK or QPSK (Quadrature Phase Shift Keying) modulation on bits of the HARQ-ACK feedback information, sequentially mapping all generated modulated symbols to all REs included in the PUSCH resources for transmission.

One skilled in the art can understand that all or partial steps in the above-mentioned methods can be completed by a program instructing relevant hardware, and the program can be stored in a computer readable storage medium such as a read only memory, a magnetic disk or a compact disk. Optionally, all or partial steps of the above-mentioned embodiments can also be implemented by using one or more integrated circuits. Correspondingly, each module/unit in the above-mentioned embodiments can be implemented by means of hardware, and can also be implemented by means of a software function module. The present invention is not limited to combinations of hardware and software in any specific form.

The scope of the invention is defined by the independent claims. Preferred embodiments are defined by the dependent claims.

Industrial Applicability

By configuring the proprietary PUCCHs or candidate PUCCH resources for transmitting the HARQ-ACK feedback for the terminal in a coverage-enhanced mode or scenario, the embodiments of the present invention avoid the conflict between the HARQ-ACK feedback channels of the coverage-enhanced terminal and the normal LTE terminal.

**Claims**

1. A transmission method for Hybrid Automatic Repeat Request Acknowledgement, HARQ-ACK, feedback information, comprising: when a base station determines that a terminal is in a coverage-enhanced scenario; wherein, repetitive transmission is used in the coverage-enhanced scenario,
   determining, by the base station, a Physical Uplink Control Channel, PUCCH, corresponding to the terminal according to a preset transmission policy (600), wherein the transmission policy is: transmitting, by the base station, PUCCH indication signaling to the terminal, the indication signaling carrying information of one PUCCH of preset N PUCCHs, the one PUCCH being a PUCCH corresponding to the terminal, wherein N is a positive integer greater than or equal to 2; or determining a PUCCH corresponding to the terminal according to preset resources; or determining a preset terminal-specific PUCCH to be a PUCCH corresponding to the terminal; and
   receiving, by the base station, HARQ-ACK feedback information from the terminal through the PUCCH corresponding to the terminal (601); **characterized in that**,
   when the transmission policy is: determining a PUCCH corresponding to the terminal according to preset resources; the preset resources comprise at least one of follows:

   a number of Control Channel Elements, CCEs, occupied by Physical Downlink Control Channel, PDCCH, sub-frames occupied by PDCCH, a number of sub-frames occupied by PDCCH, sub-frames occupied by PUCCH, a number of sub-frames occupied by PUCCH, sub-frames occupied by Physical Downlink Shared Channel, PDSCH, a number of sub-frames occupied by PDSCH, Physical Resource Blocks, PRBs, occupied by PDSCH, a number of PRBs occupied by PDSCH and an identification of the terminal,
   and, the step of determining a PUCCH corresponding to the terminal according to preset resources comprises:

   acquiring a reference PUCCH;
   determining a PUCCH offset according to the acquired reference PUCCH and the preset resources; and
   calculating a sum of an index of the reference PUCCH and the PUCCH offset, wherein the sum value is a PUCCH index.

2. The transmission method according to claim 1, wherein, the transmission policy is: transmitting, by the base station, PUCCH indication signaling to the terminal, when the indication signaling carries information of one PUCCH of preset N PUCCHs, the preset N PUCCHs being continuous or discontinuous,
   and,
   wherein, when the PUCCHs are discontinuous PUCCH format 1/1a/1b channels, a spacing between two adjacent PUCCHs of the preset N PUCCHs is determined according to at least one of the following parameters:

   a number N of the preset PUCCHs, an implicit mapping offset $N_{PUCCH}^{(1)}$ and a number $Q^{(1)}$ of PUCCH format 1/1a/1b channels included in hybrid PUCCH resources indexed as $N_{RB}^{(2)}$,
   and,
   wherein, when the PUCCHs are discontinuous PUCCH format 2/2a/2b channels, a spacing between two adjacent PUCCHs of the preset N PUCCHs is determined according to at least one of the following parameters:
   a number N of the preset PUCCHs, a total number $N_{PUCCH,max}^{(2)}$ of PUCCH format 2/2a/2b channels, and a

number $Q^{(2)}$ of PUCCH format 2/2a/2b channels included in hybrid PUCCH resources indexed as $N_{RB}^{(2)}$.

3. The transmission method according to claim 2, wherein, when the PUCCH is the PUCCH format 1/1a/1b channel, a first PUCCH of the preset N PUCCHs is a PUCCH format 1/1a/1b channel indexed as 0; or a PUCCH format 1/1a/1b channel indexed as $N_{PUCCH}^{(1)}$-1; or a PUCCH format 1/1a/1b channel indexed as $Q^{(1)}$, wherein $Q^{(1)}$ is a number of PUCCH format 1/1a/1b channels included in hybrid PUCCH resources indexed as $N_{RB}^{(2)}$
or,
wherein, when the PUCCH is the PUCCH format 2/2a/2b channel,
a first PUCCH of the preset N PUCCHs is a PUCCH format 2/2a/2b channel indexed as 0; or a PUCCH format 2/2a/2b channel indexed as $N_{PUCCH,max}^{(2)}$-1, wherein $N_{PUCCH,max}^{(2)}$ is a total number of PUCCH format 2/2a/2b channels; or a PUCCH format 2/2a/2b channel indexed as $N_{PUCCH,max}^{(2)}$-$Q^{(2)}$-1, wherein $Q^{(2)}$ is a number of PUCCH format 2/2a/2b channels included in hybrid PUCCH resources indexed as $N_{RB}^{(2)}$.

4. The transmission method according to any one of claims 2-3, wherein the indication signaling comprises:

   Downlink Control Information, DCI, signaling born in a PDCCH or Radio Resource Control, RRC, signaling born in a PDSCH
   and,
   wherein the RRC signaling comprises signaling born in Msg2 or Msg4 related to a random access process; and the RRC signaling is semi-static configuration signaling,
   and,
   wherein the DCI signaling comprises DCI signaling for indicating a PUCCH for transmitting HARQ-ACK feedback information or DCI signaling for resource allocation of PDSCHs;
   a DCI format is a proprietary DCI format of the coverage-enhanced terminal; and
   the DCI signaling is dynamic configuration signaling.

5. The transmission method according to claim 1, wherein, when the PUCCH is the PUCCH format 1/1a/1b, the reference PUCCH comprises:

   a PUCCH format 1/1a/1b channel indexed as 0;
   or a PUCCH format 1/1a/1b channel indexed as $N_{PUCCH}^{(1)}$-1; or a PUCCH format 1/1a/1b channel indexed as $Q^{(1)}$, wherein, $N_{PUCCH}^{(1)}$ is first $N_{PUCCH}^{(1)}$ channels in all PUCCH format 1/1a/1b channels;
   or,
   wherein, when the PUCCH is the PUCCH format 2/2a/2b, the reference PUCCH comprises:

   a PUCCH format 2/2a/2b channel indexed as 0;
   or a PUCCH format 2/2a/2b channel indexed as $N_{PUCCH,max}^{(2)}$-1; or a PUCCH format 2/2a/2b channel indexed as $N_{PUCCH,max}^{(2)}$-$Q^{(2)}$-1.

6. The transmission method according to claim 1, wherein the step of determining a PUCCH offset according to the acquired reference PUCCH and the preset resources comprises:

   determining a direction of the PUCCH offset according to the acquired reference PUCCH; and
   determining a magnitude of the PUCCH offset according to the preset resources.

7. The transmission method according to claim 6, wherein the step of determining a direction of the PUCCH offset according to the acquired reference PUCCH comprises:

   when the acquired reference PUCCH is a PUCCH format 1/1a/1b channel indexed as 0, or a PUCCH format 2/2a/2b channel indexed as 0 or a PUCCH format 1/1a/1b channel indexed as $Q^{(1)}$, determining the direction of the PUCCH offset to be positive; and
   when the acquired reference PUCCH is a PUCCH format 1/1a/1b channel indexed as $N_{PUCCH}^{(1)}$-1, or a PUCCH format 2/2a/2b channel indexed as $N_{PUCCH,max}^{(2)}$-1 or a PUCCH format 2/2a/2b channel indexed as $N_{PUCCH,max}^{(2)}$-$Q^{(2)}$-1, determining the direction of the PUCCH offset to be negative,
   or,
   wherein the step of determining a magnitude of the PUCCH offset according to the preset resources comprises:
   determining the magnitude of the PUCCH offset according to an index of a first sub-frame occupied by the PDCCH; or according to an index of a first CCE occupied by the PDCCH and the number of the CCEs; or according to the number of the sub-frames occupied by the PDCCH; or according to the index of the first CCE occupied by the PDCCH, the index of the first sub-frame, the number of the CCEs and the number of the sub-frames; or according to the number of the sub-frames occupied by the PUCCH; or according to the number of the sub-frames occupied by the PDSCH; or according to the identification of the terminal.

8. The transmission method according to claim 1, wherein the transmission policy is determining a preset terminal-specific PUCCH to be a PUCCH corresponding to the terminal, comprising:

a PUCCH format 1/1a/1b channel indexed as 0;
or a PUCCH format 1/1a/1b channel indexed as $N_{PUCCH}^{(1)}$-1; or a PUCCH format 1/1a/1b channel indexed as $Q^{(1)}$; or a PUCCH format 2/2a/2b channel indexed as 0; or a PUCCH format 2/2a/2b channel indexed as $N_{PUCCH,max}^{(2)}$-1; or a PUCCH format 2/2a/2b channel indexed as $N_{PUCCH,max}^{(2)}$-$Q^{(2)}$-1.

9. The transmission method according to any one of claims 1, 2 and 8, wherein, when the HARQ-ACK feedback information and service data are transmitted on a same sub-frame, the method further comprises:
receiving, by the base station, the HARQ-ACK feedback information through the determined PUCCH or PUSCH resources bearing the service data.

10. The transmission method according to claim 9, wherein the step of receiving the HARQ-ACK feedback information through PUSCH resources bearing the service data comprises:

receiving the HARQ-ACK feedback information according to a way of transmitting service data through the PUSCH;
or selecting a PRB pair from resources corresponding to the PUSCH bearing the service data, and receiving the HARQ-ACK feedback information by means of a PUCCH format 1a/1b.

11. The transmission method according to claim 9, wherein the method further comprises:

receiving, by the base station, the service data according to a number of sub-frames after addition;
or after the service data are transmitted, receiving the service data according to a way of adaptively repetitively transmitting;
or according to a number of sub-frames for simultaneously transmitting the HARQ-ACK feedback information and the service data, determining whether to receive the service data according to the way of adaptively repetitively transmitting after the service data are transmitted.

12. A transmission method for Hybrid Automatic Repeat Request Acknowledgement, HARQ-ACK, feedback information, comprising: when a terminal is in a coverage-enhanced scenario ; wherein, repetitive transmission is used in the coverage-enhanced scenario
determining, by the terminal, a Physical Uplink Control Channel, PUCCH, corresponding to the terminal according to a preset transmission policy (600), wherein the transmission policy is: receiving, by the terminal, PUCCH indication signaling from a base station, the indication signaling carrying information of one PUCCH of preset N PUCCHs, the one PUCCH being a PUCCH corresponding to the terminal, wherein N is a positive integer greater than or equal to 2; or determining a PUCCH corresponding to the terminal according to preset resources; or determining a preset terminal-specific PUCCH to be a PUCCH corresponding to the terminal; and
transmitting, by the terminal, HARQ-ACK feedback information through the determined PUCCH (601), **characterized in that**,
when the transmission policy is: determining a PUCCH corresponding to the terminal according to preset resources; the preset resources comprise at least one of follows:

a number of Control Channel Elements, CCEs, occupied by PDCCH, sub-frames occupied by Physical Downlink Control Channel, PDCCH,
a number of sub-frames occupied by PDCCH, sub-frames occupied by PUCCH, a number of sub-frames occupied by PUCCH, sub-frames occupied by Physical Downlink Shared Channel, PDSCH, a number of sub-frames occupied by PDSCH, Physical Resource Blocks, PRBs, occupied by PDSCH, a number of PRBs occupied by PDSCH and an identification of the terminal,
and, the step of determining a PUCCH corresponding to the terminal according to preset resources comprises:

acquiring a reference PUCCH;

determining a PUCCH offset according to the acquired reference PUCCH and the preset resources; and calculating a sum of an index of the reference PUCCH and the PUCCH offset, wherein the sum value is a PUCCH index.

**13.** The transmission method according to claim 12, wherein, the transmission policy is: receiving, by the terminal, PUCCH indication signaling from the base station, when the indication signaling carries information of one PUCCH of preset N PUCCHs, the preset N PUCCHs being continuous or discontinuous,
and,
wherein, when the PUCCHs are discontinuous PUCCH format 1/1a/1b channels, a spacing between two adjacent PUCCHs of the preset N PUCCHs is determined according to at least one of the following parameters:

a number N of the preset PUCCHs, an implicit mapping offset $N_{PUCCH}^{(1)}$ and a number $Q^{(1)}$ of PUCCH format 1/1a/1b channels included in hybrid PUCCH resources indexed as $N_{RB}^{(2)}$,
and,
wherein, when the PUCCHs are discontinuous PUCCH format 2/2a/2b channels, a spacing between two adjacent PUCCHs of the preset N PUCCHs is determined according to at least one of the following parameters:
a number N of the preset PUCCHs, a total number $N_{PUCCH,max}^{(2)}$ of PUCCH format 2/2a/2b channels, and a number $Q^{(2)}$ of PUCCH format 2/2a/2b channels included in hybrid PUCCH resources indexed as $N_{RB}^{(2)}$.

**14.** The transmission method according to claim 13, wherein, when the PUCCH is the PUCCH format 1/1a/1b channel, a first PUCCH of the preset N PUCCHs is a PUCCH format 1/1a/1b channel indexed as 0; or a PUCCH format 1/1a/1b channel indexed as $N_{PUCCH}^{(1)}-1$; or a PUCCH format 1/1a/1b channel indexed as $Q^{(1)}$, wherein $Q^{(1)}$ is a number of PUCCH format 1/1a/1b channels included in hybrid PUCCH resources indexed as $N_{RB}^{(2)}$,
or,
wherein, when the PUCCH is the PUCCH format 2/2a/2b channel,
a first PUCCH of the preset N PUCCHs is a PUCCH format 2/2a/2b channel indexed as 0; or a PUCCH format 2/2a/2b channel indexed as $N_{PUCCH,max}^{(2)}-1$, wherein $N_{PUCCH,max}^{(2)}$ is a total number of PUCCH format 2/2a/2b channels; or a PUCCH format 2/2a/2b channel indexed as $N_{PUCCH,max}^{(2)}-Q^{(2)}-1$, wherein $Q^{(2)}$ is a number of PUCCH format 2/2a/2b channels included in hybrid PUCCH resources indexed as $N_{RB}^{(2)}$).

**15.** The transmission method according to any one of claims 13-14, wherein the indication signaling comprises:

Downlink Control Information, DCI, signaling born in a PDCCH or Radio Resource Control, RRC, signaling born in a PDSCH
and,
wherein the RRC signaling comprises signaling born in Msg2 or Msg4 related to a random access process; and the RRC signaling is semi-static configuration signaling,
and,
wherein the DCI signaling comprises DCI signaling for indicating a PUCCH for transmitting HARQ-ACK feedback information or DCI signaling for resource allocation of PDSCHs;
a DCI format is a proprietary DCI format of the coverage-enhanced terminal; and
the DCI signaling is dynamic configuration signaling.

**16.** The transmission method according to claim 12, wherein, when the PUCCH is the PUCCH format 1/1a/1b, the reference PUCCH comprises:

a PUCCH format 1/1a/1b channel indexed as 0;
or a PUCCH format 1/1a/1b channel indexed as $N_{PUCCH}^{(1)}-1$; or a PUCCH format 1/1a/1b channel indexed as $Q^{(1)}$,
or,
wherein, when the PUCCH is the PUCCH format 2/2a/2b, the reference PUCCH comprises:

a PUCCH format 2/2a/2b channel indexed as 0;
or a PUCCH format 2/2a/2b channel indexed as $N_{PUCCH,max}^{(2)}-1$; or a PUCCH format 2/2a/2b channel indexed as $N_{PUCCH,max}^{(2)}-Q^{(2)}-1$.

**17.** The transmission method according to claim 12, wherein the step of determining a PUCCH offset according to the acquired reference PUCCH and the preset resources comprises:

determining a direction of the PUCCH offset according to the acquired reference PUCCH; and
determining a magnitude of the PUCCH offset according to the preset resources.

18. The transmission method according to claim 17, wherein the step of determining a direction of the PUCCH offset according to the acquired reference PUCCH comprises:

when the acquired reference PUCCH is a PUCCH format 1/1a/1b channel indexed as 0, or a PUCCH format 2/2a/2b channel indexed as 0 or a PUCCH format 1/1a/1b channel indexed as $Q^{(1)}$, determining the direction of the PUCCH offset to be positive; and
when the acquired reference PUCCH is a PUCCH format 1/1a/1b channel indexed as $N_{PUCCH}^{(1)}-1$, wherein, $N_{PUCCH}^{(1)}$ is first $N_{PUCCH}^{(1)}$ channels in all PUCCH format 1/1a/1b channels; or a PUCCH format 2/2a/2b channel indexed as $N_{PUCCH,max}^{(2)}-1$ or a PUCCH format 2/2a/2b channel indexed as $N_{PUCCH,max}^{(2)}-Q^{(2)}-1$, determining the direction of the PUCCH offset to be negative,
or,
wherein the step of determining a magnitude of the PUCCH offset according to the preset resources comprises: determining the magnitude of the PUCCH offset according to an index of a first sub-frame occupied by the PDCCH; or according to an index of a first CCE occupied by the PDCCH and the number of the CCEs; or according to the number of the sub-frames occupied by the PDCCH; or according to the index of the first CCE occupied by the PDCCH, the index of the first sub-frame, the number of the CCEs and the number of the sub-frames; or according to the number of the sub-frames occupied by the PUCCH; or according to the number of the sub-frames occupied by the PDSCH; or according to the identification of the terminal.

19. The transmission method according to claim 12, wherein the transmission policy is determining a preset terminal-specific PUCCH to be a PUCCH corresponding to the terminal, comprising:

a PUCCH format 1/1a/1b channel indexed as 0;
or a PUCCH format 1/1a/1b channel indexed as $N_{PUCCH}^{(1)}-1$; or a PUCCH format 1/1a/1b channel indexed as $Q^{(1)}$; or a PUCCH format 2/2a/2b channel indexed as 0; or a PUCCH format 2/2a/2b channel indexed as $N_{PUCCH,max}^{(2)}-1$; or a PUCCH format 2/2a/2b channel indexed as $N_{PUCCH,max}^{(2)}-Q^{(2)}-1$.

20. The transmission method according to any one of claims 12, 13 and 19, wherein, when the HARQ-ACK feedback information and service data are transmitted on a same sub-frame, the method further comprises:
canceling, by the terminal, the transmission of the service data, and transmitting the HARQ-ACK feedback information through the determined PUCCH or PUSCH resources bearing the service data.

21. The transmission method according to claim 20, wherein the step of transmitting the HARQ-ACK feedback information through PUSCH resources bearing the service data comprises:

transmitting the HARQ-ACK feedback information according to a way of transmitting service data through the PUSCH;
or selecting a PRB pair from resources corresponding to the PUSCH bearing the service data, and transmitting the HARQ-ACK feedback information by means of a PUCCH format 1a/1b.

22. The transmission method according to claim 20, wherein the method further comprises:

transmitting, by the terminal, the service data according to a number of sub-frames after addition;
or after the service data are transmitted, adaptively repetitively transmitting the service data;
or according to a number of sub-frames for simultaneously transmitting the HARQ-ACK feedback information and the service data, determining whether to adaptively repetitively transmit the service data after the service data are transmitted.

23. A transmission system for Hybrid Automatic Repeat Request Acknowledgement, HARQ-ACK, feedback information, wherein the transmission system at least comprises a base station and a terminal, wherein,
the base station is configured to, when determining that the terminal is in a coverage-enhanced scenario ; wherein, repetitive transmission is used in the coverage-enhanced scenario; determine a Physical Uplink Control Channel, PUCCH, corresponding to the terminal according to a preset transmission policy (600); and receive HARQ-ACK feedback information through the PUCCH corresponding to the terminal (601); and
the terminal is configured to determine a PUCCH corresponding to the terminal according to a preset transmission policy (600); and transmit HARQ-ACK feedback information through the determined PUCCH (601);
wherein the transmission policy is:

transmitting, by the base station, PUCCH indication signaling to the terminal, the indication signaling carrying information of one PUCCH of preset N PUCCHs, the one PUCCH being a PUCCH corresponding to the terminal, wherein N is a positive integer greater than or equal to 2;
or determine a PUCCH corresponding to the terminal according to preset resources;
or determine a preset terminal-specific PUCCH to be a PUCCH corresponding to the terminal; **characterized in that**,
when the transmission policy is: determining a PUCCH corresponding to the terminal according to preset resources;
the preset resources comprise at least one of follows:

a number of Control Channel Elements, CCEs, occupied by PDCCH, sub-frames occupied by PDCCH, a number of sub-frames occupied by Physical Downlink Control Channel, PDCCH, sub-frames occupied by PUCCH, a number of sub-frames occupied by PUCCH, sub-frames occupied by Physical Downlink Shared Channel, PDSCH, a number of sub-frames occupied by PDSCH, Physical Resource Blocks, PRBs, occupied by PDSCH, a number of PRBs occupied by PDSCH and an identification of the terminal,
and, the terminal is further configured to:

acquire a reference PUCCH;
determine a PUCCH offset according to the acquired reference PUCCH and the preset resources; and
calculate a sum of an index of the reference PUCCH and the PUCCH offset, wherein the sum value is a PUCCH index.

24. The transmission system according to claim 23, wherein the base station at least comprises a determining module, a first processing module and a first receiving module, wherein,
the determining module is configured to, when determining that the terminal is in a coverage-enhanced scenario, notify the first processing module;
the first processing module is configured to determine the PUCCH corresponding to the terminal according to the preset transmission policy; and
the first receiving module is configured to receive the HARQ-ACK feedback information from the terminal through the PUCCH corresponding to the terminal; and
the terminal at least comprises a second processing module and a second transmitting module, wherein,
the second processing module is configured to determine the PUCCH corresponding to the terminal according to the preset transmission policy; and
the second transmitting module is configured to transmit the HARQ-ACK feedback information through the determined PUCCH,
and,
wherein,
the base station further comprises a first transmitting module configured to receive a notification from the first processing module and transmit PUCCH indication information to the terminal; and correspondingly,
the terminal further comprises a second receiving module configured to receive the indication signaling from the base station and output the indication signaling to the second processing module.

25. A base station, comprising a determining module, a first processing module and a first receiving module, wherein,
the determining module is configured to, when determining that a terminal is in a coverage-enhanced scenario ; wherein, repetitive transmission is used in the coverage-enhanced scenario; notify the first processing module;
the first processing module is configured to determine a PUCCH corresponding to the terminal according to a preset transmission policy (600); and
the first receiving module is configured to receive HARQ-ACK feedback information from the terminal through the PUCCH corresponding to the terminal (601) ; **characterized in that**,
when the transmission policy is: determining a PUCCH corresponding to the terminal according to preset resources;
the preset resources comprise at least one of follows:

a number of Control Channel Elements, CCEs, occupied by Physical Downlink Control Channel, PDCCH, sub-frames occupied by PDCCH, a number of sub-frames occupied by PDCCH, sub-frames occupied by PUCCH, a number of sub-frames occupied by PUCCH, sub-frames occupied by PDSCH, a number of sub-frames occupied by PDSCH, Physical Resource Blocks, PRBs, occupied by Physical Downlink Shared Channel, PDSCH, a number of PRBs occupied by PDSCH and an identification of the terminal,

and, the step of determining a PUCCH corresponding to the terminal according to preset resources comprises: acquiring a reference PUCCH; determining a PUCCH offset according to the acquired reference PUCCH and the preset resources; and calculating a sum of an index of the reference PUCCH and the PUCCH offset, wherein the sum value is a PUCCH index.

26. The base station according to claim 25, wherein the base station further comprises a first transmitting module configured to receive a notification from the first processing module and transmit PUCCH indication information to the terminal.

27. A terminal, in a coverage-enhanced scenario, at least comprising a second processing module and a second transmitting module; wherein, repetitive transmission is used in the coverage-enhanced scenario; wherein,

the second processing module is configured to determine a PUCCH corresponding to the terminal according to a preset transmission policy (600); and

the second transmitting module is configured to transmit HARQ-ACK feedback information through the determined PUCCH (601); **characterized in that**,

when the transmission policy is: determining a PUCCH corresponding to the terminal according to preset resources; the preset resources comprise at least one of follows:

a number of Control Channel Elements, CCEs, occupied by Physical Downlink Control Channel, PDCCH, sub-frames occupied by PDCCH, a number of sub-frames occupied by PDCCH, sub-frames occupied by PUCCH, a number of sub-frames occupied by PUCCH, sub-frames occupied by Physical Downlink Shared Channel, PDSCH, a number of sub-frames occupied by PDSCH, Physical Resource Blocks, PRBs, occupied by PDSCH, a number of PRBs occupied by PDSCH and an identification of the terminal, and, the terminal is further configured to:

acquire a reference PUCCH;
determine a PUCCH offset according to the acquired reference PUCCH and the preset resources; and
calculate a sum of an index of the reference PUCCH and the PUCCH offset, wherein the sum value is a PUCCH index.

28. The terminal according to claim 27, wherein the terminal further comprises a second receiving module configured to receive indication signaling from a base station and output the indication signaling to the second processing module.

**Patentansprüche**

1. Übertragungsverfahren für hybride automatische Wiederholungsanforderungsbestätigung (HARQ-ACK)-Rückkopplungsinformationen, umfassend: wenn eine Basisstation feststellt, dass sich ein Endgerät in einem Szenario mit verbesserter Abdeckung befindet; wobei eine sich wiederholende Übertragung in dem Szenario mit verbesserter Abdeckung verwendet wird,

Bestimmen, durch die Basisstation, eines physikalischen Uplink-Steuerkanal (PUCCH), der dem Endgerät gemäß einer voreingestellten Übertragungsrichtlinie (600) entspricht, wobei die Übertragungsrichtlinie ist: Senden der PUCCH-Anzeigesignalisierung an das Endgerät durch die Basisstation, wobei die Anzeigesignalisierung Informationen von einem PUCCH von voreingestellten N PUCCHs trägt, wobei der eine PUCCH ein PUCCH ist, der dem Endgerät entspricht, wobei N eine positive ganze Zahl größer oder gleich 2 ist; oder Bestimmen eines PUCCH, der dem Endgerät entspricht, gemäß voreingestellten Ressourcen; oder Bestimmen eines voreingestellten Endgerätspezifischen PUCCH als einen PUCCH, der dem Endgerät entspricht; und

Empfangen von HARQ-ACK-Rückkopplungsinformationen von dem Endgerät über den PUCCH, der dem Endgerät (601) entspricht, durch die Basisstation; **dadurch gekennzeichnet, dass**

wenn die Übertragungsrichtlinie lautet: Bestimmen eines PUCCH, der dem Endgerät entspricht, gemäß voreingestellten Ressourcen;

die voreingestellten Ressourcen mindestens eine der folgenden Optionen umfassen:

eine Anzahl von Steuerkanalelementen, CCEs, die vom physikalischen Downlink-Steuerkanal (PDCCH), belegt sind, Teilrahmen, die vom PDCCH belegt sind, eine Anzahl von Teilrahmen, die vom PDCCH belegt sind, Teilrahmen, die vom PUCCH belegt sind, eine Anzahl von Teilrahmen, die vom PUCCH belegt sind, Teilrahmen, die vom gemeinsam genutzten physikalischen Downlink-Kanal (PDSCH) belegt sind, eine Anzahl von Teilrahmen, die vom PDSCH belegt sind, physikalische Ressourcenblöcken (PRBs), die vom PDSCH belegt sind, eine Anzahl von PRBs, die vom PDSCH belegt sind, und eine Identifizierung des Endgeräts, und der Schritt des Bestimmens eines PUCCH, der dem Endgerät entspricht, gemäß voreingestellter Ressourcen umfasst:

Erfassen eines Referenz-PUCCH;

Bestimmen eines PUCCH-Versatzes gemäß dem erfassten Referenz-PUCCH und den voreingestellten Ressourcen; und

Berechnen einer Summe eines Index des Referenz-PUCCH und des PUCCH-Versatzes, wobei der Summenwert ein PUCCH-Index ist.

2. Übertragungsverfahren nach Anspruch 1, wobei die Übertragungsrichtlinie ist: Senden der PUCCH-Anzeigesignalisierung an das Endgerät durch die Basisstation, wenn die Anzeigesignalisierung Informationen von einem PUCCH von voreingestellten N PUCCHs trägt, wobei die voreingestellten N PUCCHs kontinuierlich oder diskontinuierlich sind,
und
wobei, wenn die PUCCHs diskontinuierliche PUCCH-Format 1/la/1b-Kanäle sind, ein Abstand zwischen zwei benachbarten PUCCHs der voreingestellten N PUCCHs gemäß mindestens einem der folgenden Parameter bestimmt wird:

eine Anzahl N der voreingestellten PUCCHs, einen impliziten Abbildungsversatz $N_{PUCCH}^{(1)}$ und eine Anzahl $Q^{(1)}$ von PUCCH-Format 1/1a/1b-Kanälen, die in hybriden PUCCH-Ressourcen enthalten sind, die als $N_{RB}^{(2)}$ indiziert sind,
und,
wobei, wenn die PUCCHs diskontinuierliche PUCCH-Format 2/2a/2b-Kanäle sind, ein Abstand zwischen zwei benachbarten PUCCHs der voreingestellten N PUCCHs gemäß mindestens einem der folgenden Parameter bestimmt wird:
eine Anzahl N der voreingestellten PUCCHs, eine Gesamtzahl $N_{PUCCH,max}^{(2)}$ von PUCCH-Format 2/2a/2b-Kanälen und eine Anzahl $Q^{(2)}$ von PUCCH-Format 2/2a/2b-Kanälen, die in Hybrid-PUCCH-Ressourcen enthalten sind, die als $N_{RB}^{(2)}$ indiziert sind.

3. Übertragungsverfahren nach Anspruch 2, wobei, wenn der PUCCH den PUCCH-Format 1/1a/1b-Kanal ist,
ein erster PUCCH der voreingestellten N PUCCHs einen PUCCH-Format 1/1a/1b-Kanal ist, der als 0 indiziert ist; oder einen PUCCH-Format 1/1a/1b-Kanal, der als $N_{PUCCH}^{(1)}$-1 indiziert ist; oder einen PUCCH-Format 1/1a/1b-Kanal, der als $Q^{(1)}$ indiziert ist, wobei $Q^{(1)}$ eine Anzahl von PUCCH-Format 1/1a/1b-Kanälen ist, die in hybriden PUCCH-Ressourcen enthalten sind, die als $N_{RB}^{(2)}$ indiziert sind;
oder
wobei, wenn der PUCCH der PUCCH-Format 2/2a/2b-Kanal ist,
ein erster PUCCH der voreingestellten N PUCCHs einen PUCCH-Format 2/2a/2b-Kanal ist, der als 0 indiziert ist; oder einen PUCCH-Format 2/2a/2b-Kanal, der als $N_{PUCCH,max}^{(2)}$-1 indiziert ist, wobei $N_{PUCCH,max}^{(2)}$ eine Gesamtzahl von PUCCH-Format 2/2a/2b-Kanälen ist; oder einen PUCCH-Format 2/2a/2b-Kanal, der als $N_{PUCCH,max}^{(2)}$-$Q^{(2)}$-1 indiziert ist, wobei $Q^{(2)}$ eine Anzahl von PUCCH-Format 2/2a/2b-Kanälen ist, die in hybriden PUCCH-Ressourcen enthalten sind, die als $N_{RB}^{(2)}$ indiziert sind.

4. Übertragungsverfahren nach einem der Ansprüche 2 bis 3, wobei die Anzeigesignalisierung umfasst:

Downlink-Steuerinformationen (DCI)-Signalisierung, die in einem PPDCCH geboren ist,
oder Funkressourcensteuerung (RRC)-Signalisierung, die in einem PDSCH geboren ist,
und
wobei die RRC-Signalisierung eine Signalisierung umfasst, die in Msg2 oder Msg4 geboren ist, die sich auf ein Direktzugriffsverfahren bezieht; und
die RRC-Signalisierung eine semistatische Konfigurationssignalisierung ist,
und
wobei die DCI-Signalisierung eine DCI-Signalisierung zum Anzeigen eines PUCCH zum Übertragen von HARQ-ACK-Rückkopplungsinformationen oder eine DCI-Signalisierung zum Ressourcenzuweisen von PDSCHs umfasst;
ein DCI-Format ein proprietäres DCI-Format des Endgeräts mit verbesserter Abdeckung ist; und

die DCI-Signalisierung eine dynamische Konfigurationssignalisierung ist.

5. Übertragungsverfahren nach Anspruch 1, wobei, wenn der PUCCH das PUCCH-Format 1/1a/1b ist, der Referenz-PUCCH umfasst:

   einen PUCCH-Format 1/1a/1b-Kanal, der als 0 indiziert ist; oder
   einen PUCCH-Format 1/1a/1b-Kanal, der als $N_{PUCCH}^{(1)}$-1 indiziert ist; oder einen PUCCH-Format 1/1a/1b-Kanal, der als $Q^{(1)}$ indiziert ist, wobei $N_{PUCCH}^{(1)}$ der erste $N_{PUCCH}^{(1)}$-Kanal in allen PUCCH-Format 1/1a/1b-Kanälen ist;
   oder
   wobei, wenn der PUCCH das PUCCH-Format 2/2a/2b ist, der Referenz-PUCCH umfasst:

   einen PUCCH-Format 2/2a/2b-Kanal, der als 0 indiziert ist;
   oder einen PUCCH-Format 2/2a/2b-Kanal, der als $N_{PUCCH,max}^{(2)}$-1 indiziert ist; oder ein PUCCH-Format 2/2a/2b-Kanal, der als $N_{PUCCH,max}^{(2)}$-$Q^{(2)}$-1 indiziert ist.

6. Übertragungsverfahren nach Anspruch 1, wobei der Schritt des Bestimmens eines PUCCH-Versatzes gemäß dem erfassten Referenz-PUCCH und den voreingestellten Ressourcen umfasst:

   Bestimmen einer Richtung des PUCCH-Versatzes gemäß dem erfassten Referenz-PUCCH; und
   Bestimmen einer Größe des PUCCH-Versatzes gemäß den voreingestellten Ressourcen.

7. Übertragungsverfahren nach Anspruch 6, wobei der Schritt des Bestimmens einer Richtung des PUCCH-Versatzes gemäß dem erfassten Referenz-PUCCH umfasst:

   wenn der erfasste Referenz-PUCCH einen PUCCH-Format 1/1a/1b-Kanal ist, der als 0 indiziert ist, oder einen PUCCH-Format 2/2a/2b-Kanal, der als 0 indiziert ist, oder einen PUCCH-Format 1/1a/1b-Kanal, der als $Q^{(1)}$ indiziert ist, Bestimmen der Richtung des PUCCH-Versatzes als positiv; und
   wenn der erfasste Referenz-PUCCH einen PUCCH-Format 1/1a/1b-Kanal ist, der als $N_{PUCCH}^{(1)}$-1 indiziert ist, oder einen PUCCH-Format 2/2a/2b-Kanal, der als $N_{PUCCH,max}^{(2)}$-1 indiziert ist, oder einen PUCCH-Format 2/2a/2b-Kanal der als $N_{PUCCH,max}^{(2)}$-$Q^{(2)}$-1 indiziert ist, Bestimmen der Richtung des PUCCH-Versatzes als negativ, oder
   wobei der Schritt des Bestimmens einer Größe des PUCCH-Versatzes gemäß den voreingestellten Ressourcen umfasst:
   Bestimmen der Größe des PUCCH-Versatzes gemäß einem Index eines ersten vom PDCCH belegten Teilrahmens; oder gemäß einem Index eines ersten vom PDCCH belegten CCE, und der Anzahl der CCEs; oder gemäß der Anzahl der vom PDCCH belegten Teilrahmen; oder gemäß dem Index des ersten vom PDCCH belegten CCE, dem Index des ersten Teilrahmens, der Anzahl der CCEs und der Anzahl der Teilrahmen; oder entsprechend der Anzahl der vom PUCCH belegten Teilrahmen; oder gemäß der Anzahl der vom PDSCH belegten Teilrahmen; oder entsprechend der Identifikation des Endgeräts.

8. Übertragungsverfahren nach Anspruch 1, wobei die Übertragungsrichtlinie bestimmt, dass ein voreingestellter Endgerätspezifischer PUCCH ein dem Endgerät entsprechender PUCCH ist, umfassend:

   einen PUCCH-Format 1/1a/1b-Kanal, der als 0 indiziert ist; oder
   einen PUCCH-Format 1/1a/1b-Kanal, der als $N_{PUCCH}^{(1)}$-1 indiziert ist, oder einen PUCCH-Format 1/1a/1b-Kanal, der als $Q^{(1)}$ indiziert ist; oder einen PUCCH-Format 2/2a/2b-Kanal, der als 0 indiziert ist; oder einen PUCCH-Format 2/2a/2b-Kanal, der als $N_{PUCCH,max}^{(2)}$-1 indiziert ist; oder einen PUCCH-Format 2/2a/2b-Kanal, der als $N_{PUCCH,max}^{(2)}$-$Q^{(2)}$-1 indiziert ist.

9. Übertragungsverfahren nach einem der Ansprüche 1, 2 und 8, wobei, wenn die HARQ-ACK-Rückkopplungsinformationen und Servicedaten auf demselben Teilrahmen übertragen werden, das Verfahren ferner umfasst:
   Empfangen der HARQ-ACK-Rückkopplungsinformationen durch die Basisstation über die bestimmten PUCCH- oder PUSCH-Ressourcen, die die Servicedaten tragen.

10. Übertragungsverfahren nach Anspruch 9, wobei der Schritt des Empfangens der HARQ-ACK-Rückkopplungsinformation über PUSCH-Ressourcen, die die Servicedaten tragen, umfasst:

Empfangen der HARQ-ACK-Rückkopplungsinformationen gemäß einer Art zum Übertragen von Servicedaten über den PUSCH; oder

Auswählen eines PRB-Paares aus Ressourcen, die dem PUSCH entsprechen, der die Servicedaten trägt, und Empfangen der HARQ-ACK-Rückkopplungsinformationen mittels eines PUCCH-Formats 1a/1b.

11. Übertragungsverfahren nach Anspruch 9, wobei das Verfahren ferner umfasst:

Empfangen der Servicedaten durch die Basisstation gemäß einer Anzahl von Teilrahmen nach dem Hinzufügen; oder nachdem die Servicedaten übertragen wurden, Empfangen der Servicedaten gemäß einer Art zur adaptiven wiederholten Übertragung;

oder gemäß einer Anzahl von Teilrahmen zum gleichzeitigen Übertragen der HARQ-ACK-Rückkopplungsinformationen und der Servicedaten, Bestimmen, ob die Servicedaten gemäß der Art der adaptiven wiederholten Übertragung nach dem Senden der Servicedaten empfangen werden sollen.

12. Übertragungsverfahren für hybride automatische Wiederholungsanforderungsbestätigung (HARQ-ACK)-Rückkopplungsinformationen, umfassend: wenn sich ein Endgerät in einem Szenario mit verbesserter Abdeckung befindet; wobei eine wiederholte Übertragung in dem Szenario mit verbesserter Abdeckung verwendet wird, Bestimmen eines physikalischen Uplink-Steuerkanals (PUCCH) durch das Endgerät, der dem Endgerät gemäß einer voreingestellten Übertragungsrichtlinie (600) entspricht, wobei die Übertragungsrichtlinie lautet: Empfangen einer PUCCH-Anzeigesignalisierung von einer Basisstation durch das Endgerät, wobei die Anzeigesignalisierung Informationen von einem PUCCH von voreingestellten N PUCCHs trägt, wobei der eine PUCCH ein PUCCH ist, der dem Endgerät entspricht, wobei N eine positive ganze Zahl größer oder gleich 2 ist; oder Bestimmen eines PUCCH, der dem Endgerät entspricht, gemäß voreingestellten Ressourcen; oder Bestimmen eines voreingestellten Endgerätspezifischen PUCCH als einen PUCCH, der dem Endgerät entspricht; und Übertragen von HARQ-ACK-Rückkopplungsinformationen durch das Endgerät über den bestimmten PUCCH (601), **dadurch gekennzeichnet, dass** wenn die Übertragungsrichtlinie lautet: Bestimmen eines PUCCH, der dem Endgerät entspricht, gemäß voreingestellten Ressourcen; die voreingestellten Ressourcen umfassen mindestens eine der folgenden Optionen:

eine Anzahl von Steuerkanalelementen (CCEs), die vom PDCCH belegt sind, Teilrahmen, die vom physikalischen Downlink-Steuerkanal (PDCCH) belegt sind, eine Anzahl von Teilrahmen, die vom PDCCH belegt sind, Teilrahmen, die vom PUCCH belegt sind, eine Anzahl von Teilrahmen, die vom PUCCH belegt sind, Teilrahmen, die vom gemeinsam genutzten physikalischen Downlink-Kanal (PDSCH) belegt sind, eine Anzahl von Teilrahmen, die vom PDSCH belegt sind, physikalische Ressourcenblöcke (PRBs), die vom PDSCH belegt sind, eine Anzahl von PRBs, die vom PDSCH belegt sind, und eine Identifizierung des Endgeräts, und der Schritt des Bestimmens eines PUCCH, der dem Endgerät entspricht, gemäß voreingestellter Ressourcen umfasst:

Erfassen eines Referenz-PUCCH;
Bestimmen eines PUCCH-Versatzes gemäß dem erfassten Referenz-PUCCH und den voreingestellten Ressourcen; und
Berechnen einer Summe eines Index des Referenz-PUCCH und des PUCCH-Versatzes, wobei der Summenwert ein PUCCH-Index ist.

13. Übertragungsverfahren nach Anspruch 12, wobei die Übertragungsrichtlinie ist: Empfangen einer PUCCH-Anzeigesignalisierung von der Basisstation durch das Endgerät, wenn die Anzeigesignalisierung Informationen von einem PUCCH von voreingestellten N PUCCHs trägt, wobei die voreingestellten N PUCCHs kontinuierlich oder diskontinuierlich sind, und wobei, wenn die PUCCHs diskontinuierliche PUCCH-Format 1/1a/1b-Kanäle sind, ein Abstand zwischen zwei benachbarten PUCCHs der voreingestellten N PUCCHs gemäß mindestens einem der folgenden Parameter bestimmt wird:

eine Anzahl N der voreingestellten PUCCHs, ein impliziter Abbildungsoffset $N_{PUCCH}^{(1)}$ und eine Anzahl $Q^{(1)}$ von PUCCH-Format 1/1a/1b-Kanälen, die in Hybrid-PUCCH-Ressourcen enthalten sind, die als $N_{RB}^{(2)}$ indiziert sind,

und

wobei, wenn die PUCCHs diskontinuierliche PUCCH-Format 2/2a/2b-Kanäle sind, ein Abstand zwischen zwei benachbarten PUCCHs der voreingestellten N PUCCHs gemäß mindestens einem der folgenden Parameter bestimmt wird:

eine Anzahl N der voreingestellten PUCCHs, eine Gesamtzahl $N_{PUCCH,max}^{(2)}$ von PUCCH-Format 2/2a/2b-Kanälen und eine Anzahl $Q^{(2)}$ von PUCCH-Format 2/2a/2b-Kanälen, die in hybriden PUCCH-Ressourcen enthalten sind, die als $N_{RB}^{(2)}$ indiziert sind.

14. Übertragungsverfahren nach Anspruch 13, wobei, wenn der PUCCH der PUCCH-Format 1/1a/1b-Kanal ist, ein erster PUCCH der voreingestellten N PUCCHs ein PUCCH-Format 1/1a/1b-Kanal ist, der als 0 indiziert ist; oder ein PUCCH-Format 1/1a/1b-Kanal, der als $N_{PUCCH}^{(1)}$-1 indiziert ist; oder ein PUCCH-Format 1/1a/1b-Kanal, der als $Q^{(1)}$ indiziert ist, wobei $Q^{(1)}$ eine Anzahl von PUCCH-Format 1/1a/1b-Kanälenist, die in hybriden PUCCH-Ressourcen enthalten sind, die als $N_{RB}^{(2)}$ indiziert sind,

oder

wobei, wenn der PUCCH der PUCCH-Format 2/2a/2b-Kanal ist, ein erster PUCCH der voreingestellten N PUCCHs ein PUCCH-Format 2/2a/2b-Kanal ist, der als 0 indiziert ist; oder ein PUCCH-Format 2/2a/2b-Kanal, der als $N_{PUCCH,max}^{(2)}$-1 indiziert ist, wobei $N_{PUCCH,max}^{(2)}$ eine Gesamtzahl von PUCCH-Format 2/2a/2b-Kanälen ist; oder ein PUCCH-Format 2/2a/2b-Kanal, der als $N_{PUCCH,max}^{(2)}$-$Q^{(2)}$-1 indiziert ist, wobei $Q^{(2)}$ eine Anzahl von PUCCH-Format 2/2a/2b-Kanälen ist, die in hybriden PUCCH-Ressourcen enthalten sind, die als $N_{RB}^{(2)}$ indiziert sind.

15. Übertragungsverfahren nach einem der Ansprüche 13 bis 14, wobei die Anzeigesignalisierung umfasst:

Downlink-Steuerinformationen (DCI)-Signalisierung, die in einem PDCCH geboren ist,

oder Funkressourcensteuerung (RRC)-Signalisierung, die in einem PDSCH geboren ist,

und

wobei die RRC-Signalisierung eine Signalisierung in Msg2 oder Msg4 umfasst, die sich auf einen Direktzugriffsprozess bezieht; und

die RRC-Signalisierung eine semistatische Konfigurationssignalisierung ist,

und

wobei die DCI-Signalisierung eine DCI-Signalisierung zum Anzeigen eines PUCCH zum Senden von HARQ-ACK-Rückkopplungsinformationen oder eine DCI-Signalisierung zum Ressourcenzuweisen von PDSCHs umfasst;

ein DCI-Format ein proprietäres DCI-Format des Endgeräts mit verbesserter Abdeckung ist; und

die DCI-Signalisierung eine dynamische Konfigurationssignalisierung ist.

16. Übertragungsverfahren nach Anspruch 12, wobei, wenn der PUCCH das PUCCH-Format 1/1a/1b ist, der Referenz-PUCCH umfasst:

einen PUCCH-Format 1/1a/1b-Kanal, der als 0 indiziert ist; oder

einen PUCCH-Format1/1a/1b-Kanal, der als $N_{PUCCH}^{(1)}$-1 indiziert ist; oder einen PUCCH-Format 1/1a/1b-Kanal, der als $Q^{(1)}$ indiziert ist;

oder

wobei, wenn der PUCCH das PUCCH-Format 2/2a/2b ist, der Referenz-PUCCH umfasst:

einen PUCCH-Format 2/2a/2b-Kanal, der als 0 indiziert ist;

oder einen PUCCH-Format 2/2a/2b-Kanal, der als $N_{PUCCH,max}^{(2)}$-1 indiziert ist; oder einen PUCCH-Format 2/2a/2b-Kanal, der als $N_{PUCCH,max}^{(2)}$-$Q^{(2)}$-1 indiziert ist.

17. Übertragungsverfahren nach Anspruch 12, wobei der Schritt des Bestimmens eines PUCCH-Versatzes gemäß dem erfassten Referenz-PUCCH und den voreingestellten Ressourcen umfasst:

Bestimmen einer Richtung des PUCCH-Versatzes gemäß dem erfassten Referenz-PUCCH; und

Bestimmen einer Größe des PUCCH-Versatzes gemäß den voreingestellten Ressourcen.

18. Übertragungsverfahren nach Anspruch 17, wobei der Schritt des Bestimmens einer Richtung des PUCCH-Versatzes gemäß dem erfassten Referenz-PUCCH umfasst:

wenn der erfasste Referenz-PUCCH ein PUCCH-Format 1/1a/1b-Kanal ist, der als 0 indiziert ist, oder ein PUCCH-Format 2/2a/2b-Kanal, der als 0 indiziert ist, oder ein PUCCH-Format 1/1a/1b-Kanal, der als $Q^{(1)}$ indiziert ist, Bestimmen der Richtung des PUCCH-Versatzes als positiv; und

wenn der erfasste Referenz-PUCCH ein PUCCH-Format 1/1a/1b-Kanal ist, der als $N_{PUCCH}^{(1)}$-1 indiziert ist, wobei $N_{PUCCH}^{(1)}$ der erste $NP_{UCCH}^{(1)}$-Kanal in allen PUCCH-Format 1/1a/1b-Kanälenist; oder ein PUCCH-Format 2/2a/2b-Kanal, der als $N_{PUCCH,max}^{(2)}$-1 indiziert ist, oder ein PUCCH-Format 2/2a/2b-Kanal, der als $N_{PUCCH,max}^{(2)}$-$Q^{(2)}$-1 indiziert ist, Bestimmen der Richtung des PUCCH-Versatzes als negativ; oder

wobei der Schritt des Bestimmens einer Größe des PUCCH-Versatzes gemäß den voreingestellten Ressourcen umfasst:

Bestimmen der Größe des PUCCH-Versatzes gemäß einem Index eines ersten vom PDCCH belegten Teilrahmens; oder gemäß einem Index einer ersten CCE, die vom PDCCH belegt ist, und der Anzahl der CCEs; oder gemäß der Anzahl der vom PDCCH belegten Teilrahmen; oder gemäß dem Index des ersten vom PDCCH belegten CCE, dem Index des ersten Teilrahmens, der Anzahl der CCEs und der Anzahl der Teilrahmen; oder entsprechend der Anzahl der vom PUCCH belegten Teilrahmen; oder gemäß der Anzahl der vom PDSCH belegten Teilrahmen; oder entsprechend der Identifikation des Endgeräts.

19. Übertragungsverfahren nach Anspruch 12, wobei die Übertragungsrichtlinie bestimmt, dass ein voreingestellter Endgerätspezifischer PUCCH ein PUCCH ist, der dem Endgerät entspricht, umfassend:

einen PUCCH-Format 1/1a/1b-Kanal, der als 0 indiziert ist; oder einen PUCCH-Format 1/1a/1b-Kanal, der als $N_{PUCCH}^{(1)}$-1 indiziert ist; oder einen PUCCH-Format 1/1a/1b-Kanal, der als $Q^{(1)}$indiziert ist; oder einen PUCCH-Format 2/2a/2b-Kanal, der als 0 indiziert ist; oder einen PUCCH-Format 2/2a/2b-Kanal, der als $N_{PUCCH,max}^{(2)}$-1 indiziert ist; oder einen PUCCH-Format 2/2a/2b-Kanal, der als $N_{PUCCH,max}^{(2)}$-$Q^{(2)}$-1 indiziert ist.

20. Übertragungsverfahren nach einem der Ansprüche 12, 13 und 19, wobei, wenn die HARQ-ACK-Rückkopplungsinformationen und Servicedaten auf demselben Teilrahmen übertragen werden, das Verfahren ferner umfasst: Abbrechen der Übertragung der Servicedaten durch das Endgerät und Übertragen der HARQ-ACK-Rückkopplungsinformationen über die ermittelten PUCCH- oder PUSCH-Ressourcen, die die Servicedaten tragen.

21. Übertragungsverfahren nach Anspruch 20, wobei der Schritt des Sendens der HARQ-ACK-Rückkopplungsinformation über PUSCH-Ressourcen, die die Servicedaten tragen, umfasst:

Übertragen der HARQ-ACK-Rückkopplungsinformationen gemäß einer Art zum Übertragen von Servicedaten über den PUSCH; oder Auswählen eines PRB-Paares aus Ressourcen, die dem PUSCH entsprechen, der die Servicedaten trägt, und Übertragen der HARQ-ACK-Rückkopplungsinformationen mittels eines PUCCH-Formats 1a/1b.

22. Übertragungsverfahren nach Anspruch 20, wobei das Verfahren ferner umfasst:

Übertragen der Servicedaten durch das Endgerät gemäß einer Anzahl von Teilrahmen nach dem Hinzufügen; oder nachdem die Servicedaten übertragen wurden, adaptives wiederholtes Übertragen der Servicedaten; oder gemäß einer Anzahl von Teilrahmen zum gleichzeitigen Übertragen der HARQ-ACK-Rückkopplungsinformationen und der Servicedaten, Bestimmen, ob die Servicedaten nach dem Senden der Servicedaten adaptiv wiederholt übertragen werden sollen.

23. Übertragungssystem für hybride automatische Wiederholungsanforderungsbestätigung (HARQ-ACK)-Rückkopplungsinformation, wobei das Übertragungssystem mindestens eine Basisstation und ein Endgerät umfasst, wobei die Basisstation konfiguriert ist, um: bei der Bestimmung, dass sich das Terminal in einem Szenario mit verbesserter Abdeckung befindet, wobei die wiederholte Übertragung in dem Szenario mit verbesserter Abdeckung verwendet wird, Bestimmen eines physikalischen Uplink-Steuerkanals PUCCH, der dem Endgerät entspricht, gemäß einer voreingestellten Übertragungsrichtlinie (600); und Empfangen von HARQ-ACK-Rückkopplungsinformationen über den PUCCH, der dem Endgerät (601) entspricht; und

das Endgerät konfiguriert ist, zum Bestimmen eines PUCCH, der dem Endgerät gemäß einer voreingestellten Übertragungsrichtlinie (600) entspricht; und Übertragen von HARQ-ACK-Rückkopplungsinformationen durch den bestimmten PUCCH (601); wobei die Übertragungsrichtlinie lautet:

Übertragen einer PUCCH-Anzeigesignalisierung an das Endgerät durch die Basisstation, wobei die Anzeigesignalisierung Informationen von einem PUCCH von voreingestellten N PUCCHs trägt, wobei der eine PUCCH ein PUCCH ist, der dem Endgerät entspricht, wobei N eine positive ganze Zahl größer oder gleich 2 ist; oder Bestimmen eines PUCCH, der dem Endgerät gemäß voreingestellten Ressourcen entspricht; oder Bestimmen eines voreingestellten Endgerätspezifischen PUCCH als PUCCH, der dem Endgerät entspricht; **dadurch gekennzeichnet, dass**

wenn die Übertragungsrichtlinie lautet: Bestimmen eines PUCCH, der dem Endgerät entspricht, gemäß voreingestellten Ressourcen;

die voreingestellten Ressourcen umfassen mindestens eine der folgenden Optionen:

eine Anzahl von Steuerkanalelementen, CCEs, die vom PDCCH belegt sind, Teilrahmen, die vom PDCCH belegt sind, eine Anzahl von Teilrahmen, die vom physikalischen Downlink-Steuerkanal (PDCCH) belegt sind, Teilrahmen, die vom PUCCH belegt sind, eine Anzahl von Teilrahmen, die vom PUCCH belegt sind, Teilrahmen, die vom gemeinsam genutzten physikalischen Downlink-Kanal (PDSCH) belegt sind, eine Anzahl von Teilrahmen, die vom PDSCH belegt sind, physikalische Ressourcenblöcke, PRBs, die vom PDSCH belegt sind, eine Anzahl von PRBs, die vom PDSCH belegt sind, und eine Identifizierung des Endgeräts, und

das Endgerät ferner konfiguriert ist, um:

Erfassen eines Referenz-PUCCH; Bestimmen eines PUCCH-Versatzes gemäß dem erfassten Referenz-PUCCH und den voreingestellten Ressourcen; und Berechnen einer Summe eines Index des Referenz-PUCCH und des PUCCH-Versatzes, wobei der Summenwert ein PUCCH-Index ist.

24. Übertragungssystem nach Anspruch 23, wobei die Basisstation mindestens ein Bestimmungsmodul, ein erstes Verarbeitungsmodul und ein erstes Empfangsmodul umfasst, wobei

das Bestimmungsmodul so konfiguriert ist, dass es das erste Verarbeitungsmodul benachrichtigt, wenn festgestellt wird, dass sich das Endgerät in einem Szenario mit verbesserter Abdeckung befindet;

das erste Verarbeitungsmodul konfiguriert ist, um den dem Endgerät entsprechenden PUCCH gemäß der voreingestellten Übertragungsrichtlinie zu bestimmen; und

das erste Empfangsmodul konfiguriert ist, um die HARQ-ACK-Rückkopplungsinformationen vom Endgerät über den dem Endgerät entsprechenden PUCCH zu empfangen; und

das Endgerät mindestens ein zweites Verarbeitungsmodul und ein zweites Sendemodul umfasst, wobei

das zweite Verarbeitungsmodul konfiguriert ist, um den dem Endgerät entsprechenden PUCCH gemäß der voreingestellten Übertragungsrichtlinie zu bestimmen, und

das zweite Sendemodul konfiguriert ist, um die HARQ-ACK-Rückkopplungsinformationen über den bestimmten PUCCH zu übertragen,

und

wobei

die Basisstation ferner ein erstes Sendemodul umfasst, das konfiguriert ist, um eine Benachrichtigung von dem ersten Verarbeitungsmodul zu empfangen, und PUCCH-Anzeigeinformationen an das Endgerät zu senden; und entsprechend

das Endgerät ferner ein zweites Empfangsmodul umfasst, das konfiguriert ist, um die Anzeigesignalisierung von der Basisstation zu empfangen und die Anzeigesignalisierung an das zweite Verarbeitungsmodul auszugeben.

25. Basisstation, umfassend ein Bestimmungsmodul, ein erstes Verarbeitungsmodul und ein erstes Empfangsmodul, wobei

das Bestimmungsmodul konfiguriert ist, um: bei der Bestimmung, dass sich ein Endgerät in einem Szenario mit verbesserter Abdeckung befindet, wobei die wiederholte Übertragung in dem Szenario mit verbesserter Abdeckung verwendet wird, Benachrichtigen des ersten Verarbeitungsmoduls;

das erste Verarbeitungsmodul konfiguriert ist, um einen PUCCH zu bestimmen, der dem Endgerät gemäß einer voreingestellten Übertragungsrichtlinie (600) entspricht; und

das erste Empfangsmodul konfiguriert ist, um HARQ-ACK-Rückkopplungsinformationen vom Endgerät über den PUCCH zu empfangen, der dem Endgerät (601) entspricht; **dadurch gekennzeichnet, dass**

wenn die Übertragungsrichtlinie lautet: Bestimmen eines PUCCH, der dem Endgerät entspricht, gemäß voreingestellten Ressourcen;

die voreingestellten Ressourcen umfassen mindestens eine der folgenden Optionen:

eine Anzahl von Steuerkanalelementen, CCEs, die vom physikalischen Downlink-Steuerkanal (PDCCH) belegt sind, Teilrahmen die vom PDCCH belegt sind, eine Anzahl von Teilrahmen, die vom PDCCH belegt sind, Teilrahmen, die vom PUCCH belegt sind, eine Anzahl von Teilrahmen, die vom PUCCH belegt sind, Teilrahmen, die vom PDSCH belegt sind, eine Anzahl von Teilrahmen, die vom PDSCH belegt sind, physikalische Ressourcenblöcke, PRBs, die vom gemeinsam genutzten physikalischen Downlink-Kanal (PDSCH) belegt sind, eine Anzahl von PRBs, die vom PDSCH belegt sind, und eine Identifizierung des Endgeräts,
und der Schritt des Bestimmens eines dem Endgerät entsprechenden PUCCH gemäß voreingestellten Ressourcen umfasst:
Erfassen eines Referenz-PUCCH; Bestimmen eines PUCCH-Versatzes gemäß dem erfassten Referenz-PUCCH und den voreingestellten Ressourcen; und Berechnen einer Summe eines Index des Referenz-PUCCH und des PUCCH-Versatzes, wobei der Summenwert ein PUCCH-Index ist.

26. Basisstation nach Anspruch 25, wobei die Basisstation ferner ein erstes Sendemodul umfasst, das konfiguriert ist, um eine Benachrichtigung von dem ersten Verarbeitungsmodul zu empfangen und PUCCH-Anzeigeinformationen an das Endgerät zu senden.

27. Endgerät in einem Szenario mit verbesserter Abdeckung, das mindestens ein zweites Verarbeitungsmodul und ein zweites Sendemodul umfasst; wobei die wiederholte Übertragung in dem Szenario mit verbesserter Abdeckung verwendet wird; wobei,
das zweite Verarbeitungsmodul konfiguriert ist, um einen PUCCH zu bestimmen, der dem Endgerät gemäß einer voreingestellten Übertragungsrichtlinie (600) entspricht; und
das zweite Sendemodul konfiguriert ist, um HARQ-ACK-Rückkopplungsinformationen über den bestimmten PUCCH (601) zu übertragen; **dadurch gekennzeichnet, dass**
wenn die Übertragungsrichtlinie lautet: Bestimmen eines PUCCH, der dem Endgerät entspricht, gemäß voreingestellten Ressourcen;
die voreingestellten Ressourcen mindestens eine der folgenden Optionen umfassen:

eine Anzahl von Steuerkanalelementen (CCEs), die vom physikalischen Downlink-Steuerkanal (PDCCH) belegt sind, Teilrahmen, die vom PDCCH belegt sind, eine Anzahl von Teilrahmen, die vom PDCCH belegt sind, Teilrahmen, die vom PUCCH belegt sind, eine Anzahl von Teilrahmen, die vom PUCCH belegt sind, Teilrahmen, die vom gemeinsam genutzten physikalischen Downlink-Kanal (PDSCH) belegt sind, eine Anzahl von Teilrahmen die vom PDSCH belegten sind, physikalische Ressourcenblöcke (PRBs), die vom PDSCH belegt sind, eine Anzahl von PRBs, die vom PDSCH belegten sind, und eine Identifizierung des Endgeräts, und
das Endgerät ferner konfiguriert ist, zum:

Erfassen eines Referenz-PUCCH;
Bestimmen eines PUCCH-Versatzes gemäß dem erfassten Referenz-PUCCH und den voreingestellten Ressourcen; und
Berechnen einer Summe eines Index des Referenz-PUCCH und des PUCCH-Versatzes, wobei der Summenwert ein PUCCH-Index ist.

28. Endgerät nach Anspruch 27, wobei das Endgerät ferner ein zweites Empfangsmodul umfasst, das konfiguriert ist, um eine Anzeigesignalisierung von einer Basisstation zu empfangen und die Anzeigesignalisierung an das zweite Verarbeitungsmodul auszugeben.

## Revendications

1. Procédé de transmission pour des informations en retour d'accusé de réception de requête automatique de répétition hybride, HARQ-ACK, consistant à: lorsqu'une station de base détermine qu'un terminal se trouve dans un scénario à couverture améliorée; où, une transmission répétitive est utilisée dans le scénario à couverture améliorée, déterminer, par la station de base, un canal de commande de liaison montante physique, PUCCH, correspondant au terminal selon une politique de transmission prédéfinie (600), où la politique de transmission est: la transmission, par la station de base, d'une signalisation d'indication PUCCH au terminal, la signalisation d'indication portant des informations d'un PUCCH de N PUCCH prédéfinis, l'un PUCCH étant un PUCCH correspondant au terminal, où N est un entier positif supérieur ou égal à 2; ou déterminer un PUCCH correspondant au terminal selon des ressources prédéfinies; ou déterminer un PUCCH spécifique du terminal prédéfini comme étant un PUCCH correspondant au terminal; et

recevoir, par la station de base, des informations en retour HARQ-ACK à partir du terminal via le PUCCH correspondant au terminal (601); **caractérisé en ce que**,

lorsque la politique de transmission consiste à: déterminer un PUCCH correspondant au terminal selon des ressources prédéfinies;

les ressources prédéfinies comprennent au moins l'un des éléments suivants:

un certain nombre d'éléments de canal de commande, CCE, occupés par le canal de commande de liaison descendante physique, PDCCH, des sous-trames occupées par le PDCCH, un certain nombre de sous-trames occupées par le PDCCH, des sous-trames occupées par le PUCCH, un certain nombre de sous-trames occupées par le PUCCH, des sous-trames occupées par le canal partagé de liaison descendante physique, PDSCH, un certain nombre de sous-trames occupées par le PDSCH, des blocs de ressources physiques, PRB, occupés par le PDSCH, un certain nombre de PRB occupés par le PDSCH et une identification du terminal, et,

l'étape de détermination d'un PUCCH correspondant au terminal selon les ressources prédéfinies consiste à :

acquérir un PUCCH de référence;

déterminer un décalage PUCCH selon le PUCCH de référence acquis et les ressources prédéfinies; et

calculer une somme d'un indice du PUCCH de référence et du décalage PUCCH, où la valeur de somme est un indice PUCCH.

2. Procédé de transmission selon la revendication 1, dans lequel la politique de transmission consiste à: transmettre, par la station de base, une signalisation d'indication PUCCH au terminal, lorsque la signalisation d'indication porte des informations d'un PUCCH de N PUCCH prédéfinis, les N PUCCH prédéfinis étant continus ou discontinus, et,

où, lorsque les PUCCH sont des canaux de format 1/1a/1b de PUCCH discontinus, un espacement entre deux PUCCH adjacents des N PUCCH prédéfinis est déterminé selon au moins l'un des paramètres suivants: un certain nombre N des PUCCH prédéfinis, un décalage de mappage implicite $N_{PUCCH}^{(1)}$ et un certain nombre $Q^{(1)}$ de canaux de format 1/1a/1b de PUCCH inclus dans les ressources PUCCH hybrides indexées à $N_{RB}^{(2)}$, et,

où, lorsque les PUCCH sont des canaux de format 2/2a/2b de PUCCH discontinus, un espacement entre deux PUCCH adjacents des N PUCCH prédéfinis est déterminé selon au moins l'un des paramètres suivants: un certain nombre N des PUCCH prédéfinis, un nombre total $N_{PUCCH,max}^{(2)}$ de canaux de format 2/2a/2b de PUCCH, et un certain nombre $Q^{(2)}$ de canaux de format 2/2a/2b de PUCCH inclus dans des ressources PUCCH hybrides indexées à $N_{RB}^{(2)}$ .

3. Procédé de transmission selon la revendication 2, dans lequel, lorsque le PUCCH est le canal de format 1/1a/1b de PUCCH,

un premier PUCCH des N PUCCH prédéfinis est un canal de format 1/1a/1b de PUCCH indexé à 0; ou un canal de format 1/1a/1b de PUCCH indexé à $N_{PUCCH}^{(1)}$-1; ou un canal de format 1/1a/1b de PUCCH indexé à $Q^{(1)}$, où $Q^{(1)}$ est un certain nombre de canaux de format 1/1a/1b de PUCCH inclus dans des ressources PUCCH hybrides indexées à $N_{RB}^{(2)}$;

ou,

où, lorsque le PUCCH est le canal de format 2/2a/2b de PUCCH,

un premier PUCCH des N PUCCH prédéfinis est un canal de format 2/2a/2b de PUCCH indexé à 0; ou un canal de format 2/2a/2b de PUCCH indexé à $N_{PUCCH,max}^{(2)}$-1, où $N_{PUCCH,MAX}^{(2)}$ est un nombre total de canaux de format 2/2a/2b de PUCCH; ou un canal de format 2/2a/2b de PUCCH indexé à $N_{PUCCH,max}^{(2)}$-$Q^{(2)}$-1, où $Q^{(2)}$ est un nombre de canaux de format 2/2a/2b de PUCCH inclus dans des ressources PUCCH hybrides indexées à $N_{RB}^{(2)}$.

4. Procédé de transmission selon l'une quelconque des revendications 2 à 3, dans lequel la signalisation d'indication comprend:

une signalisation de informations de commande de liaison descendante, DCI, née dans un PDCCH ou une signalisation du commande de ressource radio, RRC, née dans un PDSCH et,

où la signalisation RRC comprend une signalisation née en Msg2 ou Msg4 liée à un processus d'accès aléatoire; et

la signalisation RRC est une signalisation de configuration semi-statique,
et,
où la signalisation DCI comprend une signalisation DCI pour indiquer un PUCCH pour transmettre des informations en retour HARQ-ACK ou une signalisation DCI pour l'allocation de ressources de PDSCH;
un format DCI est un format DCI propriétaire du terminal à couverture améliorée; et
la signalisation DCI est une signalisation de configuration dynamique.

**5.** Procédé de transmission selon la revendication 1, dans lequel, lorsque le PUCCH est le format 1/1a/1b de PUCCH, le PUCCH de référence comprend:

un canal de format 1/1a/1b de PUCCH indexé à 0;
ou un canal de format 1/1a/1b de PUCCH indexé à $N_{PUCCH}^{(1)}$-1; ou un canal de format 1/1a/1b de PUCCH indexé à $Q^{(1)}$, où, $N_{PUCCH}^{(1)}$ est le premier canal $N_{PUCCH}^{(1)}$ dans tous les canaux de format 1/1a/1b de PUCCH;
ou,
où, lorsque le PUCCH est le format 2/2a/2b de PUCCH, le PUCCH de référence comprend:
un canal de format 2/2a/2b de PUCCH indexé à 0;
ou un canal de format 2/2a/2b de PUCCH indexé à $N_{PUCCH,max}^{(2)}$-1; ou un canal de format 2/2a/2b de PUCCH indexé à $N_{PUCCH,max}^{(2)}$-$Q^{(2)}$-1.

**6.** Procédé de transmission selon la revendication 1, dans lequel l'étape de détermination d'un décalage PUCCH selon le PUCCH de référence acquis et les ressources prédéfinies consiste à:

déterminer une direction du décalage PUCCH selon le PUCCH de référence acquis; et
déterminer une amplitude du décalage PUCCH selon les ressources prédéfinies.

**7.** Procédé de transmission selon la revendication 6, dans lequel l'étape de détermination d'une direction du décalage PUCCH selon le PUCCH de référence acquis consiste à:

lorsque le PUCCH de référence acquis est un canal de format 1/1a/1b de PUCCH indexé à 0, ou un canal de format 2/2a/2b de PUCCH indexé à 0 ou un canal de format 1/1a/1b de PUCCH indexé à $Q^{(1)}$, déterminer la direction du décalage PUCCH comme étant positive; et
lorsque le PUCCH de référence acquis est un canal de format 1/1a/1b de PUCCH indexé à $N_{PUCCH}^{(1)}$-1, ou un canal de format 2/2a/2b de PUCCH indexé à $N_{PUCCH,max}^{(2)}$-1 ou un canal de format 2/2a/2b de PUCCH indexé à $N_{PUCCH,max}^{(2)}$-$Q^{(2)}$-1, déterminer la direction du décalage PUCCH comme étant négatif,
ou,
où l'étape de détermination d'une amplitude du décalage PUCCH selon les ressources prédéfinies consiste à:
déterminer l'amplitude du décalage PUCCH selon un indice d'une première sous-trame occupée par le PDCCH; ou selon un indice d'un premier CCE occupé par le PDCCH et le nombre de CCE; ou selon le nombre des sous-trames occupées par le PDCCH; ou selon l'indice du premier CCE occupé par le PDCCH, l'indice de la première sous-trame, le nombre des CCE et le nombre des sous-trames; ou selon le nombre des sous-trames occupées par le PUCCH; ou selon le nombre de sous-trames occupées par le PDSCH; ou selon l'identification du terminal.

**8.** Procédé de transmission selon la revendication 1, dans lequel la politique de transmission consiste à déterminer un PUCCH spécifique du terminal prédéfini comme étant un PUCCH correspondant au terminal, comprenant:

un canal de format 1/1a/1b de PUCCH indexé à 0;
ou un canal de format 1/1a/1b de PUCCH indexé à $N_{PUCCH}^{(1)}$-1; ou un canal de format 1/1a/1b de PUCCH indexé à $Q^{(1)}$; ou un canal de format 2/2a/2b de PUCCH indexé à 0; ou un canal de format 2/2a/2b de PUCCH indexé à $N_{PUCCH,max}^{(2)}$-1; ou un canal de format 2/2a/2b de PUCCH indexé à $N_{PUCCH,max}^{(2)}$-$Q^{(2)}$-1.

**9.** Procédé de transmission selon l'une quelconque des revendications 1, 2 et 8, dans lequel, lorsque les informations en retour HARQ-ACK et les données de service sont transmises sur une même sous-trame, le procédé comprend en outre:
la réception, par la station de base, des informations en retour HARQ-ACK via les ressources PUCCH ou PUSCH déterminées portant les données de service.

**10.** Procédé de transmission selon la revendication 9, dans lequel l'étape de réception des informations en retour HARQ-ACK via des ressources PUSCH portant les données de service consiste à:

> recevoir les informations en retour HARQ-ACK selon une manière de transmission des données de service via le PUSCH;
> ou sélectionner une paire de PRB parmi les ressources correspondant au PUSCH portant les données de service, et recevoir les informations en retour HARQ-ACK au moyen d'un format 1a/1b de PUCCH.

**11.** Procédé de transmission selon la revendication 9, dans lequel le procédé consiste en outre à:

> recevoir, par la station de base, les données de service selon un certain nombre de sous-trames après addition;
> ou après la transmission des données de service, recevoir les données de service selon une modalité de transmission de manière adaptative et répétitive;
> ou selon un certain nombre de sous-trames transmettre simultanément les informations en retour HARQ-ACK et les données de service, déterminer s'il faut recevoir les données de service selon une modalité de transmission de manière adaptative et répétitive après la transmission des données de service.

**12.** Procédé de transmission pour des informations en retour d'accusé de réception de requête automatique de répétition hybride, HARQ-ACK, consistant à: lorsqu'un terminal se trouve dans un scénario à couverture améliorée; où, une transmission répétitive est utilisée dans le scénario à couverture améliorée

déterminer, par le terminal, un canal de commande de liaison montante physique, PUCCH, correspondant au terminal selon une politique de transmission prédéfinie (600), où la politique de transmission consiste à: recevoir, par le terminal, une signalisation d'indication PUCCH à partir d'une station de base, la signalisation d'indication portant des informations d'un PUCCH de N PUCCH prédéfinis, l'un PUCCH étant un PUCCH correspondant au terminal, où N est un entier positif supérieur ou égal à 2; ou déterminer un PUCCH correspondant au terminal selon des ressources prédéfinies; ou déterminer un PUCCH spécifique du terminal prédéfini comme étant un PUCCH correspondant au terminal; et

transmettre, par le terminal, des informations en retour HARQ-ACK via le PUCCH déterminé (601), **caractérisé en ce que**,

lorsque la politique de transmission consiste à: déterminer un PUCCH correspondant au terminal selon des ressources prédéfinies;

les ressources prédéfinies comprennent au moins l'un des éléments suivants:

> un certain nombre d'éléments de canal de commande, CCE, occupés par le PDCCH, des sous-trames occupés par le canal de commande de liaison descendante physique, PDCCH, un certain nombre de sous-trames occupées par le PDCCH, des sous-trames occupées par le PUCCH, un certain nombre de sous-trames occupées par le PUCCH, des sous-trames occupées par le canal partagé de liaison descendante physique, PDSCH, un certain nombre de sous-trames occupées par le PDSCH, des blocs de ressources physiques, PRB, occupés par le PDSCH, un certain nombre de PRB occupés par le PDSCH et une identification du terminal,
> et,
> l'étape de détermination d'un PUCCH correspondant au terminal selon les ressources prédéfinies consiste à :

> > acquérir un PUCCH de référence;
> > déterminer un décalage PUCCH selon le PUCCH de référence acquis et les ressources prédéfinies; et
> > calculer une somme d'un indice du PUCCH de référence et du décalage PUCCH, où la valeur de somme est un indice PUCCH.

**13.** Procédé de transmission selon la revendication 12, dans lequel la politique de transmission consiste à: recevoir, par le terminal, une signalisation d'indication PUCCH à partir de la station de base, lorsque la signalisation d'indication porte des informations d'un PUCCH de N PUCCH prédéfinis, les N PUCCH prédéfinis étant continus ou discontinus, et,

où, lorsque les PUCCH sont des canaux de format 1/1a/1b de PUCCH discontinus, un espacement entre deux PUCCH adjacents des N PUCCH prédéfinis est déterminé selon au moins l'un des paramètres suivants: un certain nombre N des PUCCH prédéfinis, un décalage de mappage implicite $N_{PUCCH}^{(1)}$ et un certain nombre $Q^{(1)}$ de canaux de format 1/1a/1b de PUCCH inclus dans les ressources PUCCH hybrides indexées à $N_{RB}^{(2)}$, et,

où, lorsque les PUCCH sont des canaux de format 2/2a/2b de PUCCH discontinus, un espacement entre deux PUCCH adjacents des N PUCCH prédéfinis est déterminé selon au moins l'un des paramètres suivants: un certain nombre N des PUCCH prédéfinis, un nombre total $N_{PUCCH,max}^{(2)}$ de canaux de format 2/2a/2b de PUCCH, et un certain nombre $Q^{(2)}$ de canaux de format 2/2a/2b de PUCCH inclus dans des ressources PUCCH hybrides indexées à $N_{RB}^{(2)}$ .

**14.** Procédé de transmission selon la revendication 13, dans lequel, lorsque le PUCCH est le canal de format 1/1a/1b de PUCCH,
un premier PUCCH des N PUCCH prédéfinis est un canal de format 1/1a/1b de PUCCH indexé à 0; ou un canal de format 1/1a/1b de PUCCH indexé à $N_{PUCCH}^{(1)}$-1; ou un canal de format 1/1a/1b de PUCCH indexé à $Q^{(1)}$, où $Q^{(1)}$ est un certain nombre de canaux de format 1/1a/1b de PUCCH inclus dans des ressources PUCCH hybrides indexées à $N_{RB}^{(2)}$;
ou,
où, lorsque le PUCCH est le canal de format 2/2a/2b de PUCCH,
un premier PUCCH des N PUCCH prédéfinis est un canal de format 2/2a/2b de PUCCH indexé à 0; ou un canal de format 2/2a/2b de PUCCH indexé à $N_{PUCCH,max}^{(2)}$-1, où $N_{PUCCH,max}^{(2)}$ est un nombre total de canaux de format 2/2a/2b de PUCCH; ou un canal de format 2/2a/2b de PUCCH indexé à $N_{PUCCH,max}^{(2)}$-$Q^{(2)}$-1, où $Q^{(2)}$ est un nombre de canaux de format 2/2a/2b de PUCCH inclus dans des ressources PUCCH hybrides indexées à $N_{RB}^{(2)}$.

**15.** Procédé de transmission selon l'une quelconque des revendications 13 à 14, dans lequel la signalisation d'indication comprend:

une signalisation de informations de commande de liaison descendante, DCI, née dans un PDCCH
ou une signalisation du commande de ressource radio, RRC, née dans un PDSCH
et,
où la signalisation RRC comprend une signalisation née en Msg2 ou Msg4 liée à un processus d'accès aléatoire;
et
la signalisation RRC est une signalisation de configuration semi-statique,
et,
où la signalisation DCI comprend une signalisation DCI pour indiquer un PUCCH pour transmettre des informations en retour HARQ-ACK ou une signalisation DCI pour l'allocation de ressources de PDSCH;
un format DCI est un format DCI propriétaire du terminal à couverture améliorée; et
la signalisation DCI est une signalisation de configuration dynamique.

**16.** Procédé de transmission selon la revendication 12, dans lequel, lorsque le PUCCH est le format 1/1a/1b de PUCCH, le PUCCH de référence comprend:

un canal de format 1/1a/1b de PUCCH indexé à 0;
ou un canal de format 1/1a/1b de PUCCH indexé à $N_{PUCCH}^{(1)}$-1; ou un canal de format 1/1a/1b de PUCCH indexé à $Q^{(1)}$,
ou,
où, lorsque le PUCCH est le format 2/2a/2b de PUCCH, le PUCCH de référence comprend:
un canal de format 2/2a/2b de PUCCH indexé à 0;
ou un canal de format 2/2a/2b de PUCCH indexé à $N_{PUCCH,max}^{(2)}$-1; ou un canal de format 2/2a/2b de PUCCH indexé à $N_{PUCCH,max}^{(2)}$-$Q^{(2)}$-1.

**17.** Procédé de transmission selon la revendication 12, dans lequel l'étape de détermination d'un décalage PUCCH selon le PUCCH de référence acquis et des ressources prédéfinies consiste à:

déterminer une direction du décalage PUCCH selon le PUCCH de référence acquis; et
déterminer une amplitude du décalage PUCCH selon les ressources prédéfinies.

**18.** Procédé de transmission selon la revendication 17, dans lequel l'étape de détermination d'une direction du décalage PUCCH selon le PUCCH de référence acquis consiste à:

lorsque le PUCCH de référence acquis est un canal de format 1/1a/1b de PUCCH indexé à 0, ou un canal de format 2/2a/2b de PUCCH indexé à 0 ou un canal de format 1/1a/1b de PUCCH indexé à $Q^{(1)}$, déterminer la direction du décalage PUCCH comme étant positive; et
lorsque le PUCCH de référence acquis est un canal de format 1/1a/1b de PUCCH indexé à $N_{PUCCH}^{(1)}$-1, où, $N_{PUCCH}^{(1)}$ est le premier canal $N_{PUCCH}^{(1)}$ dans tous les canaux de format 1/1a/1b de PUCCH; ou un canal de format 2/2a/2b de PUCCH indexé à $N_{PUCCH,max}^{(2)}$-1 ou un canal de format 2/2a/2b de PUCCH indexé à

$N_{PUCCH,max}^{(2)}$-$Q^{(2)}$-1, déterminer la direction du décalage PUCCH comme étant négatif,

ou,

où l'étape de détermination d'une amplitude du décalage PUCCH selon les ressources prédéfinies consiste à: déterminer l'amplitude du décalage PUCCH selon un indice d'une première sous-trame occupée par le PDCCH; ou selon un indice d'un premier CCE occupé par le PDCCH et le nombre de CCE; ou selon le nombre des sous-trames occupées par le PDCCH; ou selon l'indice du premier CCE occupé par le PDCCH, l'indice de la première sous-trame, le nombre des CCE et le nombre des sous-trames; ou selon le nombre des sous-trames occupées par le PUCCH; ou selon le nombre de sous-trames occupées par le PDSCH; ou selon l'identification du terminal.

19. Procédé de transmission selon la revendication 12, dans lequel la politique de transmission consiste à déterminer un PUCCH spécifique du terminal prédéfini comme étant un PUCCH correspondant au terminal, comprenant:

un canal de format 1/1a/1b de PUCCH indexé à 0;
ou un canal de format 1/1a/1b de PUCCH indexé à $N_{PUCCH}^{(1)}$-1; ou un canal de format 1/1a/1b de PUCCH indexé à $Q^{(1)}$; ou un canal de format 2/2a/2b de PUCCH indexé à 0; ou un canal de format 2/2a/2b de PUCCH indexé à $N_{PUCCH,max}^{(2)}$-1; ou un canal de format 2/2a/2b de PUCCH indexé à $N_{PUCCH,max}^{(2)}$-$Q^{(2)}$-1.

20. Procédé de transmission selon l'une quelconque des revendications 12, 13 et 19, dans lequel, lorsque les informations en retour HARQ-ACK et les données de service sont transmises sur une même sous-trame, le procédé consiste en outre à:
annuler, par le terminal, la transmission des données de service, et transmettre les informations en retour HARQ-ACK via les ressources PUCCH ou PUSCH déterminées portant les données de service.

21. Procédé de transmission selon la revendication 20, dans lequel l'étape de transmission des informations en retour HARQ-ACK via des ressources PUSCH portant les données de service consiste à:

transmettre les informations en retour HARQ-ACK selon une modalité de transmission des données de service via le PUSCH;
ou sélectionner une paire de PRB parmi les ressources correspondant au PUSCH portant les données de service, et transmettre les informations en retour HARQ-ACK au moyen d'un format 1a/1b de PUCCH.

22. Procédé de transmission selon la revendication 20, dans lequel le procédé consiste en outre à:

transmettre, par le terminal, les données de service selon un certain nombre de sous-trames après addition;
ou après la transmission des données de service, transmettre de manière adaptative et répétitive les données de service;
ou selon un certain nombre de sous-trames transmettre simultanément les informations en retour HARQ-ACK et les données de service, déterminer s'il faut transmettre de manière adaptative e répétitive les données de service après la transmission des données de service.

23. Système de transmission pour des informations en retour d'accusé de réception de requête automatique de répétition hybride, HARQ-ACK, dans lequel le système de transmission comprend au moins une station de base et un terminal, où,
la station de base est configurée pour, lors de la détermination que le terminal est dans un scénario à couverture améliorée; où, une transmission répétitive est utilisée dans le scénario à couverture améliorée; déterminer un canal de commande de liaison montante physique, PUCCH, correspondant au terminal selon une politique de transmission prédéfinie (600); et recevoir des informations en retour HARQ-ACK via le PUCCH correspondant au terminal (601); et le terminal est configuré pour déterminer un PUCCH correspondant au terminal selon une politique de transmission prédéfinie (600); et transmettre des informations en retour HARQ-ACK via le PUCCH déterminé (601) ;
où la politique de transmission consiste à:

transmettre, par la station de base, une signalisation d'indication PUCCH au terminal, la signalisation d'indication portant des informations d'un PUCCH de N PUCCH prédéfinis, l'un PUCCH étant un PUCCH correspondant au terminal, où N est un entier positif supérieur ou égal à 2;
ou déterminer un PUCCH correspondant au terminal selon des ressources prédéfinies;
ou déterminer un PUCCH spécifique du terminal prédéfini comme étant un PUCCH correspondant au terminal; **caractérisé en ce que**,

lorsque la politique de transmission consiste à: déterminer un PUCCH correspondant au terminal selon des ressources prédéfinies;

les ressources prédéfinies comprennent au moins l'un des éléments suivants:

un certain nombre d'éléments de canal de commande, CCE, occupés par le PDCCH, des sous-trames occupées par le PDCCH, un certain nombre de sous-trames occupées par le canal de commande de liaison descendante physique, PDCCH, des sous-trames occupées par le PUCCH, un certain nombre de sous-trames occupées par le PUCCH, des sous-trames occupées par le canal partagé de liaison descendante physique, PDSCH, un certain nombre de sous-trames occupées par le PDSCH, des blocs de ressources physiques, PRB, occupés par le PDSCH, un certain nombre de PRB occupés par le PDSCH et une identification du terminal,

et,

le terminal est en outre configuré pour:

acquérir un PUCCH de référence;

déterminer un décalage PUCCH selon le PUCCH de référence acquis et les ressources prédéfinies; et calculer une somme d'un indice du PUCCH de référence et du décalage PUCCH, où la valeur de somme est un indice PUCCH.

24. Système de transmission selon la revendication 23, dans lequel la station de base comprend au moins un module de détermination, un premier module de traitement et un premier module de réception, où,

le module de détermination est configuré pour, lors de la détermination que le terminal est dans un scénario amélioré de couverture, aviser le premier module de traitement;

le premier module de traitement est configuré pour déterminer le PUCCH correspondant au terminal selon la politique de transmission prédéfinie; et

le premier module de réception est configuré pour recevoir les informations en retour HARQ-ACK à partir du terminal via le PUCCH correspondant au terminal; et

le terminal comprend au moins un deuxième module de traitement et un deuxième module de transmission, où,

le deuxième module de traitement est configuré pour déterminer le PUCCH correspondant au terminal selon la politique de transmission prédéfinie; et

le deuxième module de transmission est configuré pour transmettre les informations en retour HARQ-ACK via le PUCCH déterminé,

et,

où,

la station de base comprend en outre un premier module de transmission configuré pour recevoir une notification à partir du premier module de traitement et transmettre des informations d'indication PUCCH au terminal; et en conséquence,

le terminal comprend en outre un deuxième module de réception configuré pour recevoir la signalisation d'indication à partir de la station de base et sortir la signalisation d'indication vers le deuxième module de traitement.

25. Station de base, comprenant un module de détermination, un premier module de traitement et un premier module de réception, dans laquelle,

le module de détermination est configuré pour, lors de la détermination qu'un terminal est dans un scénario à couverture améliorée; où, une transmission répétitive est utilisée dans le scénario à couverture améliorée; aviser le premier module de traitement;

le premier module de traitement est configuré pour déterminer un PUCCH correspondant au terminal selon une politique de transmission prédéfinie (600); et

le premier module de réception est configuré pour recevoir des informations en retour HARQ-ACK à partir du terminal via le PUCCH correspondant au terminal (601); **caractérisé en ce que**,

lorsque la politique de transmission consiste à: déterminer un PUCCH correspondant au terminal selon des ressources prédéfinies;

les ressources prédéfinies comprennent au moins l'un des éléments suivants:

un certain nombre d'éléments de canal de commande, CCE, occupés par le canal de commande de liaison descendante physique, PDCCH, des sous-trames occupées par le PDCCH, un certain nombre de sous-trames occupées par le PDCCH, des sous-trames occupées par le PUCCH, un certain nombre de sous-trames occupées par le PUCCH, des sous-trames occupées par le PDSCH, un certain nombre de sous-trames occupées par le PDSCH, des blocs de ressources physiques, PRB, occupés par le canal partagé de liaison descendante physique, PDSCH, un certain nombre de PRB occupés par le PDSCH et une identification du terminal, et, l'étape de détermination d'un PUCCH correspondant au terminal selon les ressources prédéfinies consiste à: acquérir un PUCCH de référence; déterminer un décalage PUCCH selon le PUCCH de référence acquis et les ressources prédéfinies; et calculer une somme d'un indice du PUCCH de référence et du décalage PUCCH, où la valeur de somme est un indice PUCCH.

26. Station de base selon la revendication 25, dans laquelle la station de base comprend en outre un premier module de transmission configuré pour recevoir une notification à partir du premier module de traitement et transmettre des informations d'indication PUCCH au terminal.

27. Terminal, dans un scénario à couverture améliorée, comprenant au moins un deuxième module de traitement et un deuxième module de transmission; où, une transmission répétitive est utilisée dans le scénario à couverture améliorée; où,

le deuxième module de traitement est configuré pour déterminer un PUCCH correspondant au terminal selon une politique de transmission prédéfinie (600); et

le deuxième module de transmission est configuré pour transmettre des informations en retour HARQ-ACK via le PUCCH déterminé (601); **caractérisé en ce que**,

lorsque la politique de transmission consiste à: déterminer un PUCCH correspondant au terminal selon des ressources prédéfinies;

les ressources prédéfinies comprennent au moins l'un des éléments suivants:

un certain nombre d'éléments de canal de commande, CCE, occupés par le canal de commande de liaison descendante physique, PDCCH, des sous-trames occupées par le PDCCH, un certain nombre de sous-trames occupées par le PDCCH, des sous-trames occupées par le PUCCH, un certain nombre de sous-trames occupées par le PUCCH, des sous-trames occupées par le canal partagé de liaison descendante physique, PDSCH, un certain nombre de sous-trames occupées par le PDSCH, des blocs de ressources physiques, PRB, occupés par le PDSCH, un certain nombre de PRB occupés par le PDSCH et une identification du terminal, et, le terminal est en outre configuré pour:

acquérir un PUCCH de référence;
déterminer un décalage PUCCH selon le PUCCH de référence acquis et les ressources prédéfinies; et
calculer la somme d'un indice du PUCCH de référence et du décalage PUCCH, où la valeur de somme est un indice PUCCH.

28. Terminal selon la revendication 27, dans lequel le terminal comprend en outre un deuxième module de réception configuré pour recevoir une signalisation d'indication d'une station de base et sortir la signalisation d'indication vers le deuxième module de traitement.

Control area
(PDCCH)

Data area
(PDSCH)

FIG. 1

FIG. 2

PUCCH resources
for PUCCH format
2/2a/2b transmission only

$$m=0$$

$$m=1$$

$$\vdots$$

Starting point of
PUCCH format 2/2a/2b
channel

PUCCH resources for both
PUCCH format 1/1a/1b and
PUCCH format 2/2a/2b
hybrid transmission

$$m = N_{RB}^{(2)} - 1$$

$$m = N_{RB}^{(2)}$$

$$m = N_{RB}^{(2)} + 1$$

Starting point of
PUCCH format
1/1a/1b channel

PUCCH resources for
PUCCH format 1/1a/1b
transmission only

$$\vdots$$

$$\vdots$$

$$m = N_{RB}^{HO} - 1$$

FIG. 3

FIG. 4

PUCCH

Sub-frame j

Uplink · · · · · ·

Sub-frames occupied
by PDCCH format 1a/1b
(coverage-enhanced UE)

Sub-frame

PDCCH

Down-
link · · · · · ·

Sub-frames
occupied
by PDCCH
(coverage-enhanced UE)

Sub-frames
occupied by PDCCH
(normal LTE UE)

Sub-frames
occupied by PDCCH
format 1a/1b
(normal LTE UE)

FIG. 5

600

A base station and a terminal respectively determine a
PUCCH corresponding to the terminal according to
a preset transmission policy

601

The terminal transmits HARQ-ACK feedback information
through the determined PUCCH, and the base station
receives the HARQ-ACK feedback information from the
terminal through the PUCCH corresponding to the terminal

FIG. 6

FIG. 7

FIG. 8

FIG. 9

FIG. 10

FIG. 11

| ◄——0——► | ◄——1——► | ◄——S₂——► | ◄—S₂+1—► | ◄—S₁-1—► | ◄——S₁——► | ◄—S₁+S₂-1—► |

◄—————————Service data transmission through PUSCH—————————►◄———Complementary transmission———►

| PUSCH | | …… | | PUSCH | …… | | PUSCH | PUSCH | …… | PUSCH |

PUSCHs for only
bearing HARQ-ACK
feedback

| ◄—First-time—► transmission | ◄—First-time—► transmission | ◄—S₂th-time—► transmission | ◄—Second-time—► transmission | ◄—(S₁-S₂)th-—► time transmission | ◄—(S₁-S₂+1)th-—► time transmission | ◄—S₁th-time—► transmission |

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Backwards compatible support for reduced bandwidth LTE UEs. *The 3GPP DRAFT,* 31 January 2012
- **IPWIRELESS INC.** Backwards compatible support for reduced bandwidth LTE UEs. *3GPP DRAFT; R1-120799,* 31 January 2012
- **INTEL CORPORATION.** Coverage enhancement of DL/UL control channels for low cost MTC. *3GPP DRAFT, R1-135105,* 13 November 2013